(19) **Europäisches Patentamt**
**European Patent Office**
**Office européen des brevets**

(11) **EP 4 391 474 A1**

(12) **EUROPEAN PATENT APPLICATION**
published in accordance with Art. 153(4) EPC

(43) Date of publication:
**26.06.2024 Bulletin 2024/26**

(21) Application number: **22866784.6**

(22) Date of filing: **09.09.2022**

(51) International Patent Classification (IPC):
**H04L 41/16** *(2022.01)*   **G06N 3/04** *(2023.01)*

(52) Cooperative Patent Classification (CPC):
**G06N 3/04; H04L 41/16; H04L 67/12; Y02D 30/70**

(86) International application number:
**PCT/CN2022/118269**

(87) International publication number:
**WO 2023/036323 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 CN 202111064144**

(71) Applicant: **Huawei Technologies Co., Ltd.
Shenzhen, Guangdong 518129 (CN)**

(72) Inventors:
• **CHAI, Xiaomeng
Shenzhen, Guangdong 518129 (CN)**
• **WU, Yiqun
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) This disclosure provides a communication method and apparatus, to resolve high model transmission overheads. The method includes: A first network element (for example, an access network device/a terminal device) determines a first submodel and a second submodel, where the first submodel and the second submodel can be used in a matching manner. The first network element sends first information to a second network element (for example, a terminal device/an access network device), where the first information indicates input data of the first submodel and/or output data of the first submodel. The second network element may train a third submodel based on the first information. A function of the third submodel is the same as a function of the first submodel.

FIG. 4E

FIG. 5A

**Description**

**CROSS-REFERENCE TO RELATED APPLICATIONS**

This application claims priority to Chinese Patent Application No. 202111064144.X, filed with the China National Intellectual Property Administration on September 10, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a wireless communication network, for example, in a mobile communication network, increasingly diversified services are supported by the network. Therefore, increasingly diversified requirements need to be met. For example, the network needs to be capable of supporting an ultra-high rate, ultra-low latency, and/or a massive connection. These features make network planning, network configuration, and/or resource scheduling increasingly complex. In addition, because a function of the network is increasingly powerful, for example, a supported spectrum is increasingly high, and new technologies such as a high-order multiple-input multipleoutput (multiple input multiple output, MIMO) technology, beamforming, and/or beam management are supported, network energy saving becomes a hot research topic. These new requirements, scenarios, and features bring an unprecedented challenge to network planning, operation and maintenance, and efficient operation. To meet this challenge, an artificial intelligence technology may be introduced into the wireless communication network, to implement network intelligence. Based on this, how to effectively implement artificial intelligence in the network is a problem worth studying.

**SUMMARY**

This disclosure provides a communication method and apparatus, to reduce transmission overheads and improve communication security.

According to a first aspect, this disclosure provides a communication method, including: determining a first submodel and a second submodel, where the first submodel and the second submodel can be used in a matching manner; and sending first information, where the first information indicates input data of the first submodel and/or output data of the first submodel, or the first information indicates input data of the first submodel and label data of the first submodel. The label data of the first submodel is an expected value or a target value of the output data of the first submodel, and may be understood as data expected to be output by the first submodel. The label data of the first submodel may alternatively be described as an output label of the first submodel.

In the foregoing design, input data and/or output data of one submodel that is of a plurality of submodels and that can be used in the matching manner are/is provided, and may be used to independently train a submodel that has a same function as the submodel or is used in the manner of matching the submodel, or input data and label data of one submodel that is of a plurality of submodels and that is used in the matching manner are provided, and may be used to independently train a submodel that has a same function as the submodel, and the submodel does not need to be transmitted over an air interface, so that transmission overheads can be reduced, and communication security can be improved.

In a possible design, an output of the first submodel is used to determine an input of the second submodel; or an output of the second submodel is used to determine an input of the first submodel. In such a design, the plurality of submodels can be used in the matching manner.

In a possible design, the first submodel is used to send information at a transmit end, and the second submodel is used to receive the information at a receive end; or the second submodel is used to send information at a transmit end, and the first submodel is used to receive the information at a receive end. Such a design is applicable to a scenario such as a scenario in which information is compressed/modulated by using a model, and can reduce overheads for transmitting the information.

In a possible design, the first submodel and the second submodel belong to a bilateral model. Such a design is applicable to a scenario in which the bilateral model needs to be deployed, can reduce overheads for sending a submodel in the bilateral model, avoids leakage of a bilateral model algorithm, and improves communication security.

In a possible design, the first information is used to train a third submodel.

In an optional implementation, a function of the third submodel is the same as a function of the first submodel;

and/or an input type of the third submodel is the same as an input type of the first submodel, and an output type of the third submodel is the same as an output type of the first submodel; and/or a dimension of input data of the third submodel is the same as a dimension of the input data of the first submodel, and a dimension of output data of the third submodel is the same as a dimension of the output data of the first submodel; and/or when an input of the third submodel is the same as the input of the first submodel, a difference between an output of the third submodel and the output of the first submodel is less than a first threshold; and/or when the input of the third submodel is the same as the input of the first submodel, a difference between the output of the third submodel and the output label of the first submodel is less than a second threshold. In such a design, the third submodel that replaces the first submodel is independently trained, so that the third submodel can be used in the manner of matching the second submodel, thereby reducing transmission overheads for sending the first submodel. In addition, the third submodel and the second submodel can also form a new bilateral model.

In another optional implementation, when the first information indicates the input data of the first submodel and/or the output data of the first submodel, a function of the third submodel is the same as a function of the second submodel; and/or an input type of the third submodel is the same as an input type of the second submodel, and an output type of the third submodel is the same as an output type of the second submodel; and/or a dimension of input data of the third submodel is the same as a dimension of input data of the second submodel, and a dimension of output data of the third submodel is the same as a dimension of output data of the second submodel; and/or when an input of the third submodel is the same as the input of the second submodel, a difference between an output of the third submodel and the output of the second submodel is less than a first threshold; and/or when the input of the third submodel is the same as the input of the second submodel, a difference between the output of the third submodel and an output label of the second submodel is less than a second threshold. In such a design, the third submodel that replaces the second submodel is independently trained, so that the third submodel can be used in the manner of matching the first submodel, thereby reducing transmission overheads for sending the second submodel. In addition, the third submodel and the first submodel can also form a new bilateral model.

In a possible design, the determining a first submodel and a second submodel includes: determining the first submodel and the second submodel based on training data, where the training data includes N pieces of channel information, N is a positive integer, and the channel information includes a downlink channel feature or a downlink channel. In such a design, channel information feedback can be performed by using the submodel used in the matching manner, and feedback overheads can be reduced.

In a possible design, the input data of the first submodel includes M pieces of channel information, and M is a positive integer.

In a possible design, the output data of the first submodel includes feature bits corresponding to the M pieces of channel information, and M is a positive integer.

In a possible design, the input data of the first submodel includes M pieces of channel information, the label data of the first submodel includes M feature bits, and M is a positive integer.

In a possible design, the method further includes: obtaining information indicating a first feature bit, where the output of the third submodel includes the first feature bit; and obtaining first channel information based on the second submodel and the first feature bit, where the input of the second submodel includes the first feature bit, and the output of the second submodel includes the first channel information.

In the foregoing design, the transmit end sends the feature bits by using the third submodel that is independently trained based on the input and the output of the first submodel, and a receive end side may restore the channel information by using the second submodel that matches the first submodel. The submodel does not need to be transmitted over the air interface, so that transmission overheads can be reduced, and communication security can be improved.

In a possible design, the input data of the first submodel includes M feature bits, and M is a positive integer.

In a possible design, the output data of the first submodel includes channel information corresponding to the M feature bits, and M is a positive integer.

In a possible design, the input data of the first submodel includes M feature bits, the label data of the first submodel includes channel information corresponding to the M feature bits, and M is a positive integer.

In a possible design, the method further includes: determining a second feature bit based on second channel information and the second submodel, where the input of the second submodel includes the second channel information, and the output of the second submodel includes the second feature bit; and sending information indicating the second feature bit.

In the foregoing design, a transmit end side sends the feature bit by using the second submodel that matches the first submodel, and the receive end may restore the channel information by using the third submodel that is independently trained based on the input and the output of the first submodel. The submodel does not need to be transmitted over the air interface, so that transmission overheads can be reduced, and communication security can be improved.

According to a second aspect, this disclosure provides a communication method, including: obtaining first information, where the first information indicates input data of a first submodel and/or output data of the first submodel,

or the first information indicates input data of a first submodel and label data of the first submodel; and training a third submodel based on the first information.

For descriptions of the first submodel, the third submodel, and the like, refer to the first aspect. Details are not described herein again. In a possible design, the method further includes: determining a first feature bit based on third channel information and the third submodel, where an input of the third submodel includes the third channel information, and an output of the third submodel includes the first feature bit; and sending information indicating the first feature bit.

In a possible design, the method further includes: obtaining information indicating a second feature bit; and obtaining fourth channel information based on the third submodel and the second feature bit, where the input of the third submodel includes the second feature bit, and the output of the third submodel includes the fourth channel information.

According to a third aspect, this disclosure provides a communication apparatus. The communication apparatus may be a first network element, or may be an apparatus in a first network element, or may be an apparatus that can be used in a manner of matching a first network element. The first network element may be an access network device or a terminal device. In a design, the apparatus may include modules that are in a one-to-one correspondence with the method/operation/step/action described in the first aspect. The modules may be implemented by a hardware circuit, software, or a combination of the hardware circuit and software.

In a design, the communication apparatus may include a processing module and a communication module.

The processing module is configured to determine a first submodel and a second submodel, where the first submodel and the second submodel can be used in a matching manner.

The communication module is configured to send first information, where the first information indicates input data of the first submodel and/or output data of the first submodel; or the first information indicates input data of the first submodel and label data of the first submodel.

For descriptions of the first submodel, the second submodel, and the like, refer to the first aspect. Details are not described herein again.

In a possible design, the communication module is further configured to obtain information indicating a first feature bit, where an output of a third submodel includes the first feature bit. The processing module is further configured to obtain first channel information based on the second submodel and the first feature bit, where an input of the second submodel includes the first feature bit, and an output of the second submodel includes the first channel information.

In a possible design, the processing module is further configured to determine a second feature bit based on second channel information and the second submodel, where the input of the second submodel includes the second channel information, and the output of the second submodel includes the second feature bit. The communication module is further configured to send information indicating the second feature bit.

According to a fourth aspect, this disclosure provides a communication apparatus. The communication apparatus may be a second network element, or may be an apparatus in a second network element, or may be an apparatus that can be used in a manner of matching a second network element. The second network element may be an access network device or a terminal device. In a design, the apparatus may include modules that are in a one-to-one correspondence with the method/operation/step/action described in the second aspect. The modules may be implemented by a hardware circuit, software, or a combination of the hardware circuit and software. In a design, the communication apparatus may include a processing module and a communication module.

The communication module is configured to obtain first information, where the first information indicates input data of a first submodel and/or output data of the first submodel; or the first information indicates input data of a first submodel and label data of the first submodel.

The processing module is configured to train a third submodel based on the first information.

For descriptions of the first submodel, the third submodel, and the like, refer to the second aspect. Details are not described herein again. In a possible design, the processing module is further configured to determine a first feature bit based on third channel information and the third submodel, where an input of the third submodel includes the third channel information, and an output of the third submodel includes the first feature bit. The communication module is further configured to send information indicating the first feature bit.

In a possible design, the communication module is further configured to obtain information indicating a second feature bit. The processing module is further configured to obtain fourth channel information based on the third submodel and the second feature bit, where the input of the third submodel includes the second feature bit, and the output of the third submodel includes the fourth channel information.

According to a fifth aspect, this disclosure provides a communication apparatus. The communication apparatus includes: a processor, configured to implement the method according to the first aspect. The communication apparatus may further include: a memory, configured to store instructions and data. The memory is coupled to the processor. When executing the instructions stored in the memory, the processor can implement the method according to the first aspect. The communication apparatus may further include a communication interface. The communication interface is used by the apparatus to communicate with another device. For example, the communication interface may be a transceiver, a circuit, a bus, a module, or another type of communication interface, and the another device may be an access network device. In a possible device, the communication apparatus includes:

a memory, configured to store program instructions; and
a processor, configured to determine a first submodel and a second submodel, where the first submodel and the second submodel can be used in a matching manner.

The processor is further configured to send first information through a communication interface, where the first information indicates input data of the first submodel and/or output data of the first submodel; or the first information indicates input data of the first submodel and label data of the first submodel.

According to a sixth aspect, this disclosure provides a communication apparatus. The communication apparatus includes: a processor, configured to implement the method according to the second aspect. The communication apparatus may further include: a memory, configured to store instructions and data. The memory is coupled to the processor. When executing the instructions stored in the memory, the processor can implement the method according to the second aspect. The apparatus may further include a communication interface. The communication interface is used by the apparatus to communicate with another device. For example, the communication interface may be a transceiver, a circuit, a bus, a module, or another type of communication interface, and the another device may be a terminal device. In a possible device, the apparatus includes:

a memory, configured to store program instructions; and
a processor, configured to obtain first information through a communication interface, where the first information indicates input data of a first submodel and/or output data of the first submodel; or the first information indicates input data of a first submodel and label data of the first submodel.

The processor is further configured to train a third submodel based on the first information.

According to a seventh aspect, this disclosure provides a communication system, including the communication apparatus according to the third aspect or the fifth aspect and the communication apparatus according to the fourth aspect or the sixth aspect.

According to an eighth aspect, this disclosure further provides a computer program. When the computer program is run on a computer, the computer is enabled to perform the method provided in any one of the first aspect or the second aspect.

According to a ninth aspect, this disclosure further provides a computer program product, including instructions. When the instructions are run on a computer, the computer is enabled to perform the method provided in any one of the first aspect or the second aspect.

According to a tenth aspect, this disclosure further provides a computer-readable storage medium, where the computer-readable storage medium stores a computer program or instructions. When the computer program or the instructions are run on a computer, the computer is enabled to perform the method provided in the first aspect or the second aspect.

According to an eleventh aspect, this disclosure further provides a chip. The chip is configured to read a computer program stored in a memory, to perform the method provided in the first aspect or the second aspect.

According to a twelfth aspect, this disclosure further provides a chip system. The chip system includes a processor, configured to support a computer apparatus in implementing the method provided in the first aspect or the second aspect. In a possible design, the chip system further includes a memory, and the memory is configured to store a program and data that are necessary for the computer apparatus. The chip system may include a chip, or may include a chip and another discrete device.

## BRIEF DESCRIPTION OF DRAWINGS

FIG. 1A is a schematic diagram of a structure of a communication system;
FIG. 1B is a schematic diagram of a structure of another communication system;
FIG. 2A is a schematic diagram of a structure of a neuron;
FIG. 2B is a schematic diagram of a layer relationship in a neural network;
FIG. 3 is a schematic flowchart of deploying a bilateral model in a conventional technology;
FIG. 4A is a schematic diagram of an AI application framework;
FIG. 4B to FIG. 4E are schematic diagrams of several network architectures;
FIG. 5A is a schematic flowchart 1 of a communication method according to this disclosure;
FIG. 5B is a schematic flowchart 1 of deploying a bilateral model according to this disclosure;

FIG. 6A is a schematic flowchart 1 of a communication method according to this disclosure;

FIG. 6B is a schematic flowchart 1 of deploying a bilateral model according to this disclosure;

FIG. 7A is a schematic flowchart 1 of a communication method according to an embodiment of this disclosure;

FIG. 7B is a schematic flowchart 1 of deploying a bilateral model according to this disclosure;

FIG. 8 is a schematic flowchart 1 of a communication method according to this disclosure;

FIG. 9 is a schematic diagram 1 of a structure of a communication apparatus according to this disclosure; and

FIG. 10 is a schematic diagram 1 of a structure of a communication apparatus according to this disclosure.

## DESCRIPTION OF EMBODIMENTS

To make the objectives, technical solutions, and advantages of this disclosure clearer, the following further describes this disclosure in detail with reference to the accompanying drawings.

"At least one" in the following in this disclosure refers to one or more. "A plurality of" refers to two or more. "And/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In addition, it should be understood that although the terms such as first and second may be used in this disclosure to describe objects, these objects should not be limited by these terms. These terms are merely used to distinguish the objects from each other.

The terms "including", "having", or any other variant thereof in following descriptions of this disclosure are intended to cover a non-exclusive inclusion. For example, a process, a method, a system, a product, or a device that includes a series of steps or units is not limited to steps or units that have been listed, but optionally further includes other unlisted steps or units, or optionally further includes other steps or units inherent to the process, the method, the product, or the device. It should be noted that, in this disclosure, terms such as "example" or "for example" are used to represent giving an example, an illustration, or a description. Any method or design solution described as an "example" or "for example" in this disclosure should not be explained as being more preferred or having more advantages than another embodiment or design solution. Exactly, use of the term "example", "for example", or the like is intended to present a related concept in a specific manner.

Technologies provided in this disclosure may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, or a system integrating a plurality of systems, or a future communication system, for example, a 6G communication system. The 5G communication system may also be referred to as a new radio (new radio, NR) system.

A network element in a communication system may send a signal to another network element or receive a signal from another network element. The signal may include information, configuration information, data, or the like. The network element may also be referred to as an entity, a network entity, a device, a communication device, a node, a communication node, or the like. In this disclosure, the network element is used as an example for description. For example, the communication system may include at least one terminal device and at least one access network device. A network element that sends the configuration information may be an access network device, and a network element that receives the configuration information may be a terminal device. In addition, it may be understood that, if the communication system includes a plurality of terminal devices, the plurality of terminal devices may also send signals to each other. That is, both the network element that sends the configuration information and the network element that receives the configuration information may be the terminal devices.

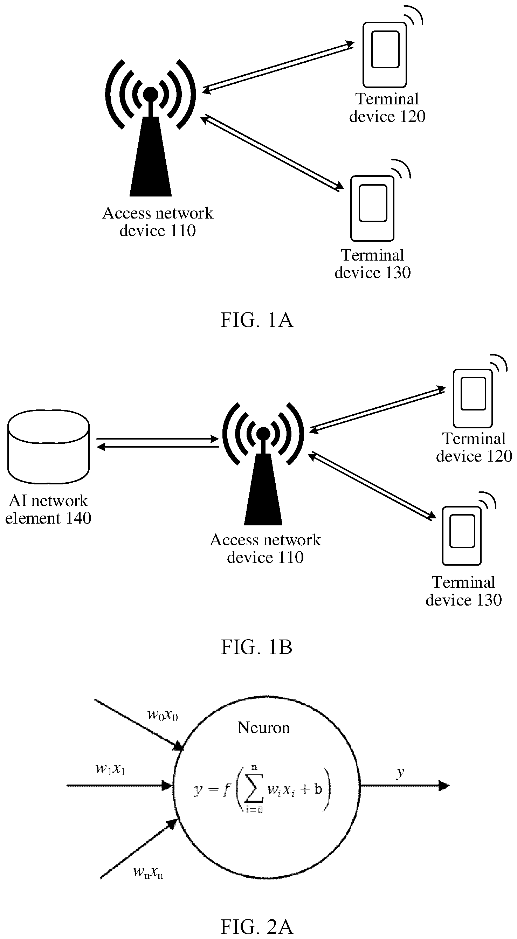

FIG. 1A shows a communication system. For example, the communication system includes an access network device 110 and two terminal devices, namely, a terminal device 120 and a terminal device 130. At least one of the terminal device 120 and the terminal device 130 may send uplink data to the access network device 110, and the access network device 110 may receive the uplink data. The access network device 110 may send downlink data to the at least one of the terminal device 120 and the terminal device 130.

The following describes in detail the terminal device and the access network device in FIG. 1A.

(1) Terminal device

A terminal device is also referred to as a terminal, user equipment (user equipment, UE), a mobile station (mobile station, MS), a mobile terminal (mobile terminal, MT), or the like, and is a device that provides a user with voice and/or data connectivity. For example, the terminal device includes a handheld device, a vehicle-mounted device, or the like that has a wireless connection function. For example, examples of some terminals are as follows: a radio network camera, a mobile phone (mobile phone), a tablet computer, a notebook computer, a palmtop computer, a mobile internet device (mobile internet device, MID), a wearable device such as a smartwatch, a virtual reality (virtual reality, VR) device, or an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city) such as a smart refueler, a terminal device on a highspeed train, and a wireless terminal in a smart home (smart home), such as a smart stereo, a smart coffee machine, or a smart printer.

In this disclosure, a communication apparatus configured to implement a function of the terminal device may be a terminal device, or may be a terminal device that has some functions of the terminal, or may be an apparatus that can support the terminal device in implementing the function, for example, a chip system. The apparatus may be mounted in the terminal device. In this disclosure, the chip system may include a chip, or may include a chip and another discrete device. In the technical solutions provided in this disclosure, an example in which a communication apparatus configured to implement a function of the terminal device is a terminal device or UE is used for description.

(2) Access network device

An access network device may be a base station (base station, BS), and the access network device may also be referred to as a network device, an access node (access node, AN), or a radio access node (radio access node, RAN). The access network device may provide a wireless access service for the terminal device. For example, the access network device includes but is not limited to at least one of the following: a base station, a next generation NodeB (generation NodeB, gNB) in 5G, an access network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), a transmission reception point (transmission reception point, TRP), a transmission point (transmission point, TP), and/or a mobile switching center. Alternatively, the access network device may be a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, a vehicle-mounted device, a wearable device, an access network device in a future evolved public land mobile network (public land mobile network, PLMN), or the like.

In this disclosure, a communication apparatus configured to implement a function of the access network device may be an access network device, or may be a network device that has some functions of the access network device, or may be an apparatus that can support the access network device in implementing the function, for example, a chip system, a hardware circuit, a software module, or a hardware circuit and a software module. The apparatus may be mounted in the access network device. In the method in this disclosure, an example in which a communication apparatus configured to implement a function of the access network device is an access network device is used for description.

(3) Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Data transmission between the access network device and the terminal device is used as an example. The data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer, the MAC layer next generates a transport block, and wireless transmission is then performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may alternatively have an application layer and a non-access stratum. The application layer may be configured to provide a service for an application mounted on the terminal device. For example, downlink data received by the terminal device may be sequentially transmitted from the physical layer to the application layer, and is further provided by the application layer for the application. For another example, the application layer may obtain data generated by an application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

(4) Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. The CU and the DU may be divided based on a protocol layer of a radio network. For example, a function of the PDCP layer and a protocol layer above the PDCP layer are set on the CU, and functions of protocol layers (such as the RLC layer and the MAC layer) below the PDCP layer are set on the DU. For another example, a function of a protocol layer above the PDCP layer is set on the CU, and functions of the PDCP layer and a protocol layer below the PDCP layer are set on the DU.

It may be understood that division of processing functions of the CU and the DU based on the protocol layers is merely an example, and there may be other division. For example, the CU or the DU may be divided to have functions of more protocol layers. For another example, the CU or the DU may alternatively be divided to have a part of processing functions of protocol layers. In a design, a part of functions of the RLC layer and a function of a protocol layer above the RLC layer are set on the CU, and remaining functions of the RLC layer and a function of a protocol layer below the RLC layer are set on the DU. In another design, functions of the CU or the DU may alternatively be divided based on a service type or another system requirement. For example, division may be performed based on latency. A function with processing time that needs to meet a latency requirement is set on the DU, and a function with processing time that does not need to meet the latency requirement is set on the CU. In another design, the CU may alternatively have one or more functions of a core network. For example, the CU may be disposed on a network side to facilitate centralized management. In another design, a radio unit (radio unit, RU) of the DU is disposed remotely. The RU has a radio frequency function.

Optionally, the DU and the RU may be divided at a physical layer (physical layer, PHY). For example, the DU may implement a higher-layer function of the PHY layer, and the RU may implement a lower-layer function of the PHY layer. For sending, a function of the PHY layer may include a cyclic redundancy check (cyclic redundancy check, CRC) code addition, channel coding, rate matching, scrambling, modulation, layer mapping, precoding, resource mapping, physical antenna mapping, and/or radio frequency sending function. For receiving, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer function of the PHY layer may include a part of functions of the PHY layer. For example, the part of functions are closer to those of the MAC layer. The lower-layer function of the PHY layer may include another part of functions of the PHY layer. For example, the part of functions are closer to those of the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding, and the lower-layer function of the PHY layer may include resource mapping, physical antenna mapping, and radio frequency sending functions.

For example, functions of the CU may be implemented by one entity, or may be implemented by different entities. For example, functions of the CU may be further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU to jointly complete a function of the access network device.

In the foregoing architecture, signaling generated by the CU may be sent to the terminal device through the DU, or signaling generated by the terminal device may be sent to the CU through the DU. For example, signaling at the RRC or PDCP layer is finally processed as signaling at the physical layer and sent to the terminal device, or is converted from signaling received from the physical layer. Based on such architectures, it may be considered that the signaling at the RRC or PDCP layer is sent by using the DU, or is sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and a method performed by the modules also fall within the protection scope of this disclosure.

It should be understood that a quantity and types of devices in the communication system shown in FIG. 1A are merely used as an example, and this disclosure is not limited thereto. In actual application, the communication system may alternatively include more terminal devices and more access network devices, or may include other devices, for example, may include a core network device and/or a network element configured to implement an artificial intelligence function.

The method provided in this disclosure may be used for communication between the access network device and the terminal device, or may be used for communication between other communication devices, for example, communication between a macro base station and a micro base station in a wireless backhaul link, or for example, communication between two terminal devices in a sidelink (sidelink, SL). This is not limited. This disclosure is described by using the communication between the access network device and the terminal device as an example.

The method provided in this disclosure relates to artificial intelligence (artificial Intelligence, AI). AI may be implemented by using various possible technologies, for example, machine learning technologies. In this disclosure, an AI function (for example, an AI module or an AI entity) may be set in an existing network element in the communication system to implement an AI-related operation. For example, in a 5G new radio (new radio, NR) system, the existing network element may be an access network device (for example, a gNB), a terminal device, a core network device, a network management (operations, administration and maintenance, OAM) device, or the like. For example, in the communication system shown in FIG. 1A, the AI function may be set in at least one network element of the access network device 110, the terminal device 120, and the terminal device 130. Alternatively, in this disclosure, an independent network element may alternatively be introduced in the communication system to perform the AI-related operation. The independent network element may be referred to as an AI network element, an AI node, or the like. This name is not limited in this disclosure. In this case, the network element that performs the AI-related operation is a network element having a built-in AI function (for example, an AI module or an AI entity). The AI-related operation may also be referred to as the AI function. For details about the AI function, refer to the following description. The AI network element may be directly connected to the access network device in the communication system, or may be indirectly connected to the access network device via a third-party network element. The third-party network element may be a core network element such as an authentication management function (authentication management function, AMF) network element or a user plane function (user plane function, UPF) network element. For example, refer to FIG. 1B. An AI network element 140 is introduced into the communication system shown in FIG. 1A. This disclosure is described by using an example in which the AI function is built inside the existing network element.

For ease of understanding, the following describes some terms of AI in this disclosure with reference to A1 to A3. It may be understood that the description is not intended to limit this disclosure.

A1: AI model

The AI model is specific implementation of the AI function. The AI model represents a mapping relationship between an input and an output of the model. The AI model may be a neural network or another machine learning model. In this disclosure, the AIfunction may include at least one of the following: data collection (training data and/or inference data collection), model learning, model information release (model information configuration), inference, or inference result release. In this disclosure, the AI model may be briefly referred to as the model. In addition, model learning may also be understood as model training.

A2: Neural network

The neural network is a specific implementation form of a machine learning technology and an AI model. According to a general approximation theorem, the neural network can theoretically approximate any continuous function, so that the neural network has a capability of learning any mapping. A conventional communication system needs to design a communication module with rich expert knowledge. However, a neural network-based deep learning communication system can automatically discover an implicit pattern structure from a large quantity of datasets, establish a mapping relationship between data, and obtain performance better than that of a conventional modeling method.

An idea of the neural network comes from a neuron structure of brain tissue. For example, each neuron performs a weighted summation operation on an input value of the neuron, and outputs an operation result by using an activation function. FIG. 2A is a schematic diagram of a structure of a neuron. It is assumed that an input of the neuron is $x = [x_0, x_1, ... , x_n]$, and a weight corresponding to each input is $w = [w, w_1, ... , w_n]$, where $w_i$ is used as a weight of $x_i$, and is used to weight $x_i$. An offset for performing weighted summation on an input value based on the weight is, for example, b. An activation function may have a plurality of forms. If an activation function of a neuron is y = *f(z)* = max(0, z), an output of the neuron is y = $f\left(\sum_{i=0}^{i=n} w_i * x_i + b\right) = \max\left(0, \sum_{i=0}^{i=n} w_i * x_i + b\right)$ . For another example, if an activation function of a neuron is y = *f(z)* = *z*, an output of the neuron is $y = f\left(\sum_{i=0}^{i=n} w_i * x_i + b\right) = \sum_{i=0}^{i=n} w_i * x_i + b$ . *b* may be any possible value such as a decimal, an integer (for example, 0, a positive integer, or a negative integer), or a complex number. Activation functions of different neurons in a neural network may be the same or different.

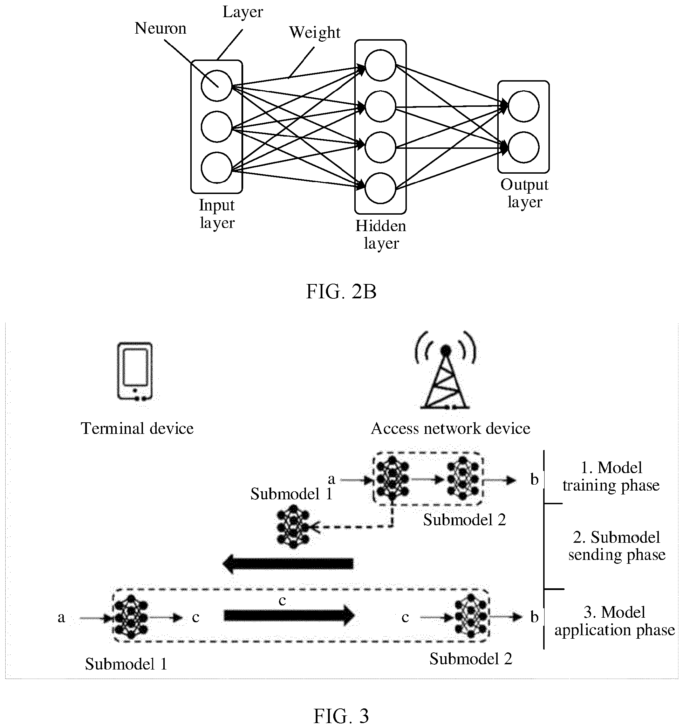

The neural network usually includes a plurality of layers, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. In an implementation, the neural network includes an input layer and an output layer. After performing neuron processing on received input information, the input layer of the neural network transfers a processing result to the output layer, and the output layer obtains an output result of the neural network. In another implementation, the neural network includes an input layer, a hidden layer, and an output layer. Refer to FIG. 2B. After performing neuron processing on received input information, the input layer of the neural network transfers a processing result to an intermediate hidden layer. The hidden layer calculates the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

The neural network in this disclosure is, for example, a deep neural network (deep neural network, DNN). In a network construction manner, the DNN may include a feedforward neural network (feedforward neural network, FNN), a convolutional neural network (convolutional neural network, CNN), and a recurrent neural network (recurrent neural network, RNN).

In addition, in a training process of the neural network, a loss function may be defined. The loss function describes a gap or difference between an output value of the neural network and an ideal target value of the neural network. A specific form of the loss function is not limited in this disclosure. The training process of the neural network is a process of adjusting a parameter of the neural network, so that a value of the loss function is less than a threshold, or a value of the loss function meets a target requirement. The adjusting a parameter of the neural network is, for example, adjusting at least one of the following parameters: a quantity of layers and a width of the neural network, a weight of a neuron, or a parameter in an activation function of a neuron.

A3: Training data

The training data may include an input of an AI model, or include an input and a target output (label) of an AI model, and is used for training the AI model. For example, the training data includes a plurality of training samples, and each training sample is one input of a neural network. The training data may also be understood as a set of training samples, or is referred to as a training dataset.

The training dataset is an important part of machine learning. A training process of the model is essentially to learn some features of the model from the training data, so that an output of the AI model is maximally close to a target output, for example, a difference between the output of the AI model and the target output is minimized. The target output may also be referred to as a label.

The method provided in this disclosure specifically relates to training and application of a bilateral model. The bilateral model is also referred to as a dual-ended model or a collaboration model. The bilateral model may include two or more submodels, the two or more submodels are used in a matching manner, and the two or more submodels may be distributed on different network elements. For example, an auto-encoder (auto-encoder, AE) is a typical bilateral model, and the auto-encoder includes an encoder and a decoder, where the encoder and the decoder are used in the matching manner, for example, an output of the encoder may be used to determine an input of the decoder. In actual use, the encoder and decoder are respectively deployed on different network elements. For example, the encoder is deployed on a terminal device, and the decoder is deployed on an access network device.

In a possible implementation, one network element trains a bilateral model, and two trained submodels are then respectively deployed on two network elements. The network element that completes bilateral model training may be one of the two network elements on which the submodels are deployed, or may be a third-party network element. For example, in a wireless communication network, the access network device may complete the bilateral model training, and then send, to the terminal device, a submodel that needs to be deployed on the terminal device. Specifically, refer to FIG. 3. There are three phases. In a model training phase, the access network device independently trains a bilateral model. The bilateral model includes a submodel 1 and a submodel 2, where an input type of the submodel 1 is a, an input type of the submodel 2 is the same as an output type of the submodel 1, and an output type of the submodel 2 is b. In a submodel sending phase, the access network device sends the submodel 1 to the terminal device. In a model application phase (or referred to as a joint deduction phase), the terminal device may obtain data of a type c based on the submodel 1 and data of the type a. That is, the input type of the submodel 1 is a, and the output type of the submodel 1 is c. The terminal device sends the data of the type c to the access network device. The access network device may obtain data of the type b based on the submodel 2 and the data of the type c. That is, the input type of the submodel 2 is c, and the output type of the submodel 2 is b.

In a conventional technology, an AI model, for example, a submodel, needs to be transmitted over an air interface. When the AI model is large, overheads for transmitting the submodel over the air interface are large. In addition, there are many AI model types and many AI model format types. Therefore, in terms of neural network classification, for example, there is an FNN, a CNN, and an RNN; and in terms of an internal structure of a neural network, a quantity of neurons at each layer, a connection relationship between the neurons at each layer, a connection relationship between layers, a type of an activation function, and the like are related. A large amount of standardization work is needed for defining the AI model or an interpretation format of the AI model. In addition, because computing capabilities of the terminal devices differ greatly, scales of AI models that can be supported are also different. If all terminal devices download AI models from the access network device, the access network device may need to separately train the AI models corresponding to UE with various computing capabilities. In this way, for the access network device, a required calculation amount and storage overheads are also large. In addition, the AI model is related to design of a related algorithm. Usually, the algorithm and the AI model are private content, and private content such as interaction between different network elements is likely to cause algorithm leakage. This is unfavorable to communication security.

Based on this, this disclosure provides a communication method, to reduce transmission overheads and improve communication security. In this disclosure, each network element may independently train submodels, and the submodels independently trained by each network element match each other, to form a bilateral model. The following describes in detail, with reference to the accompanying drawings, the communication method provided in this disclosure.

The communication method provided in this disclosure may be applied to the communication system shown in FIG. 1A or FIG. 1B. A network element in the communication system may train a bilateral model, and then send input data and/or output data of a submodel in the bilateral model to another network element in the communication system, and the another network element may obtain, through training by using the input data and/or the output data of the submodel, a submodel having a same function as the submodel. That is, each network element independently trains submodels, and the submodels independently trained by each network element match each other, to form a new bilateral model.

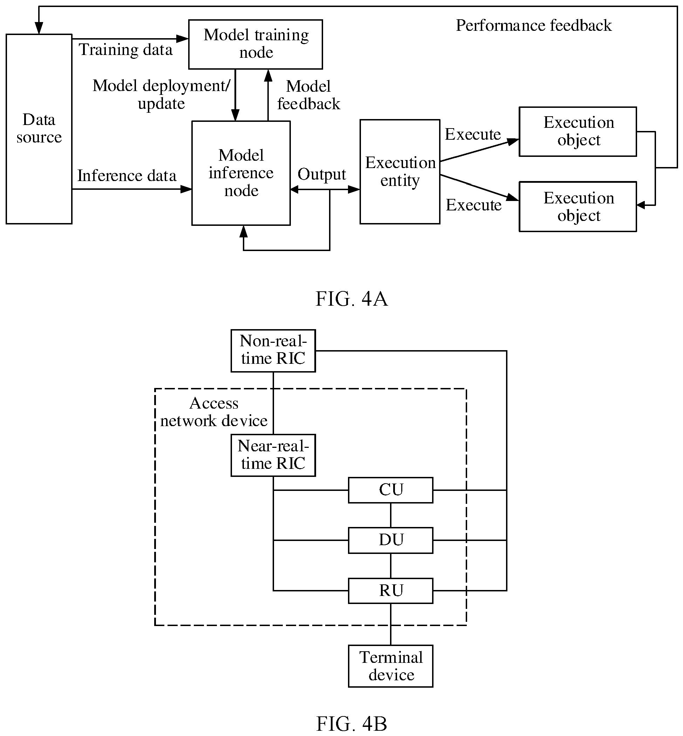

The following describes bilateral model training and a submodel training technology in this disclosure with reference to an AI application framework shown in FIG. 4A.

In FIG. 4A, a data source (data source) is used to store training data and inference data. A model training node (model training host) analyzes or trains the training data (training data) provided by the data source to obtain an AI model, and the AI model is deployed in a model inference node (model inference host). The AI model represents a mapping relationship between an input and an output of the model. Obtaining the AI model through learning by the model training node is equivalent to obtaining the mapping relationship between the input and output of the model through learning by the model training node by using the training data. The model inference node uses the AI model to perform inference based on the inference data provided by the data source to obtain an inference result. The method may also be described as follows: The model inference node inputs inference data to the AI model, and obtains an output by using the AI model. The output is the inference result. The inference result may indicate a configuration parameter used (executed) by an execution object, and/or an operation performed by the execution object. The inference result may be planned by an execution (actor) entity in a unified manner, and is sent to one or more execution objects (for example, network elements) for execution.

In this disclosure, the application framework shown in FIG. 4A may be deployed in the network element shown in FIG. 1A or FIG. 1B. For example, the application framework in FIG. 4A may be deployed in the access network device in FIG. 1A. In the access network device, the model training node may analyze or train training data (training data) provided by the data source, to obtain a bilateral model. The model inference node may use a submodel included in the bilateral model to perform inference based on the submodel and inference data provided by the data source, to obtain an output of the submodel. That is, an input of the submodel includes the inference data, and the output of the submodel is an inference result corresponding to the submodel. The terminal device is considered as the execution object in FIG. 4A. The access network device may send, to the terminal device, the inference data and/or the inference result corresponding to the submodel, and the terminal device may independently train a corresponding submodel based on the inference data and/or the inference result.

The following describes, with reference to FIG. 4B to FIG. 4E, a network architecture to which a communication solution provided in this disclosure can be applied.

As shown in FIG. 4B, in a first possible implementation, the access network device includes a near-real-time access network intelligent controller (RAN intelligent controller, RIC) module, configured to perform model learning and/or inference. For example, the near-real-time RIC may obtain information on a network side and/or a terminal side from at least one of a CU, a DU, and an RU, and the information may be used as training data or inference data. Optionally, the near-real-time RIC may submit an inference result to the at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC may be configured to: train a bilateral model, and perform inference by using a submodel in the bilateral model; or the near-real-time RIC may be configured to train a submodel that can be used in a manner of matching a submodel distributed on another network element.

As shown in FIG. 4B, in a second possible implementation, in addition to a near-real-time RIC, the access network device may include a non-real-time RIC (optionally, the non-real-time RIC may be located in OAM or a core network device), configured to perform model learning and inference. For example, the non-real-time RIC may obtain information on a network side and/or a terminal side from at least one of a CU, a DU, and an RU. The information may be used as training data or inference data. An inference result may be submitted to the at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU. For example, the non-real-time RIC is configured to: train a bilateral model, and perform inference by using a submodel in the bilateral model; or the non-real-time RIC may be configured to train a submodel that can be used in a manner of matching a submodel distributed on another network element.

As shown in FIG. 4B, in a third possible implementation, the access network device includes a near-real-time RIC, and a non-real-time RIC is included outside the access network device (optionally, the non-real-time RIC may be located in OAM or a core network device). Same as the foregoing second possible implementation, the non-real-time RIC may be configured to perform model learning and/or inference; and/or same as the foregoing first possible implementation, the near-real-time RIC may be configured to perform model learning and/or inference; and/or the near-real-time RIC may obtain AI model information from the non-real-time RIC, obtain information on a network side and/or a terminal side from at least one of a CU, a DU, and an RU, and obtain an inference result by using the information and the AI model information. Optionally, the near-real-time RIC may submit the inference result to the at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC is configured to: train a bilateral model A, and perform inference by using a submodel in the bilateral model A. For example, the non-real-time RIC is configured to: train a bilateral model B, and perform inference by using a submodel in the bilateral model B. For example, the non-real-time RIC is configured to train a bilateral model C. The bilateral model C is submitted to the near-real-time RIC, and the near-real-time RIC performs inference by using a submodel in the bilateral model C.

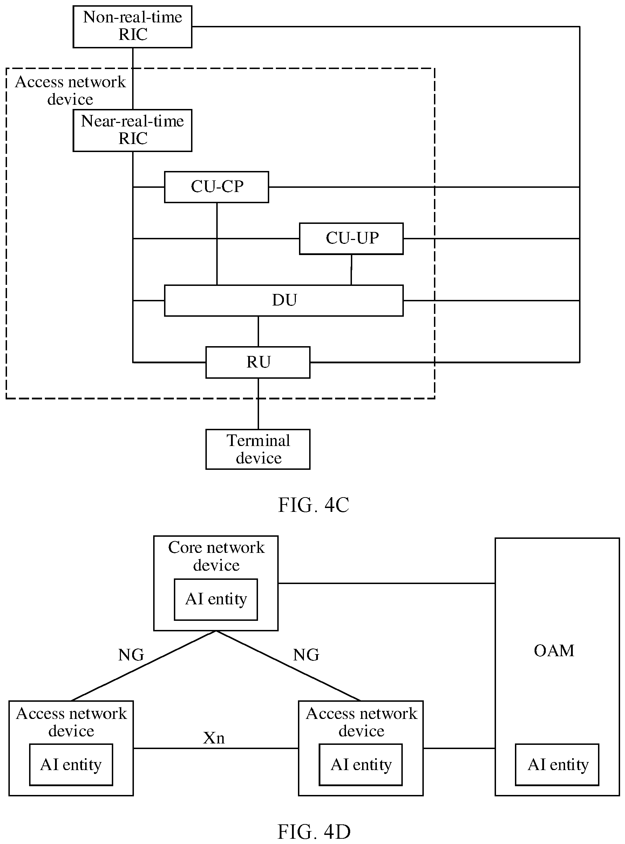

FIG. 4C is an example diagram of a network architecture to which a method provided in this disclosure can be applied. In comparison with FIG. 4B, the CU is separated into a CU-CP and a CU-UP in FIG. 4B.

FIG. 4D is an example diagram of a network architecture to which a method provided in this disclosure can be applied. As shown in FIG. 4D, optionally, the access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, the core network device includes one or more AI entities, and a function of the AI entity is similar to that of the foregoing non-real-time RIC. When both the OAM and the core network device include the AI entities, models obtained through training by the respective AI entities of the OAM and the core network device are different, and/or models used for inference are different.

In this disclosure, a difference between the models includes at least one of the following: structure parameters of the models (for example, quantities of layers of the models and/or weights), input parameters of the models, or output parameters of the models.

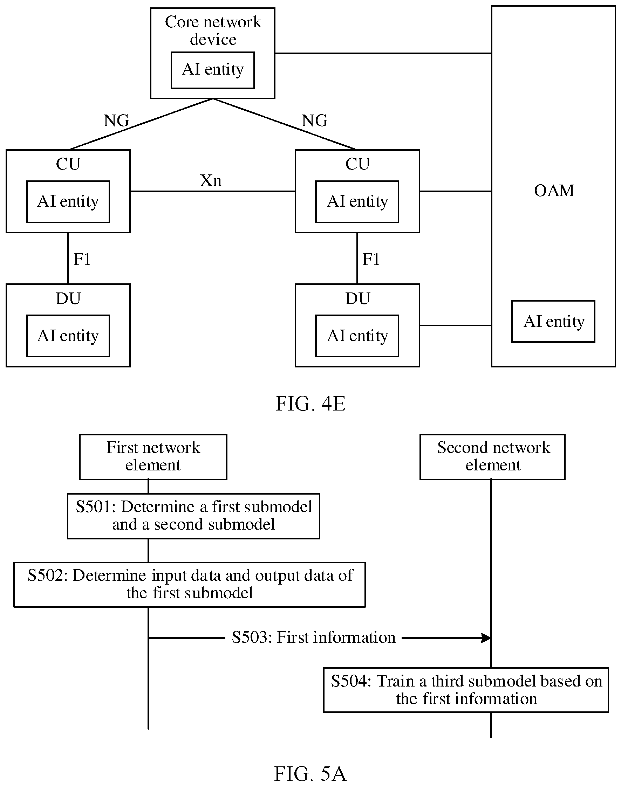

FIG. 4E is an example diagram of a network architecture to which a method provided in this disclosure can be applied. In comparison with FIG. 4D, the access network device in FIG. 4E is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When both the CU and the DU include the AI entities, models obtained through training by the respective AI entities of the CU and the DU are different, and/or models used for inference are different. Optionally, in FIG. 4E, the CU may be further separated into a CU-CP and a CU-UP. Optionally, one or more AI models may be deployed on the CU-CP; and/or one or more AI models may be deployed on the CU-UP. Optionally, in FIG. 4D or FIG. 4E, the OAM of the access network device and the OAM of the core network device may be independently deployed.

In this disclosure, one model may obtain one parameter through inference, or obtain a plurality of parameters through inference. Learning processes of different models may be deployed on different devices or nodes, or may be deployed on a same device or node. Inference processes of different models may be deployed on different devices or nodes, or may be deployed on a same device or node.

The following describes in detail, with reference to Solution 1 and Solution 2, the communication methods provided in this disclosure. Steps or operations included in these methods are merely examples, and other operations or variations of various operations may be further performed in this disclosure. In addition, the steps may be performed in different sequences presented in this disclosure, and not all the operations may need to be performed.

Solution 1

FIG. 5A shows a communication method. The method includes the following procedure.

S501: A first network element determines a first submodel and a second submodel.

The first submodel and the second submodel can be used in a matching manner. For use of the first submodel and the second submodel in the matching manner, refer to any one of the following two optional implementations for understanding.

In an optional implementation, an output of the first submodel is used to determine an input of the second submodel. Alternatively, output data of the first submodel may be used to generate input data of the second submodel. For example, the input data of the second submodel includes the output data of the first submodel. Alternatively, for example, the input data of the second submodel may be obtained after the output data of the first submodel is correspondingly preprocessed. The output of the first submodel and the input of the second submodel may meet at least one of the following features: an output type of the first submodel is the same as an input type of the second submodel; or a dimension of the output data of the first submodel is the same as a dimension of the input data of the second submodel; or a format of the output data of the first submodel is the same as a format of the input data of the second submodel.

In another optional implementation, an output of the second submodel is used to determine an input of the first submodel, or output data of the second submodel may be used to generate input data of the first submodel. For example, the input of the first submodel includes the output of the second submodel. Alternatively, for example, the input of the first submodel may be obtained after the output of the second submodel is correspondingly preprocessed. The output of the second submodel and the input of the first submodel may meet at least one of the following features: an output type of the second submodel is the same as an input type of the first submodel; or a dimension of the output data of the second submodel is the same as a dimension of the input data of the first submodel; or a format of the output data of the second submodel is the same as a format of the input data of the first submodel.

Specifically, the first submodel and the second submodel may belong to a bilateral model. The first network element may obtain related training data based on a scenario in which the bilateral model needs to be deployed. The first network element trains the first submodel and the second submodel based on the training data. The scenario in which the bilateral model needs to be deployed may include at least one of the following: channel information feedback, where, for example, a second network element side compresses channel state information (channel state Information, CSI) by using one of the submodels, and sends the compressed CSI to the first network element, and the first network element restores the CSI by using the other of the submodels; bilateral AI modulation and demodulation, where, for example, the second network element side performs signal modulation by using one of the submodels, and the first network element performs signal demodulation by using the other of the submodels; and bilateral AI beam prediction, where, for example, a second network element generates one or more beams by using one of the submodels, and sends a reference signal to the first network element by using the one or more beams, and the first network element predicts an optimal beam by using the other of the submodels and one or more received reference signals.

Optionally, the first submodel and the second submodel may be used in different network elements. For example, the first submodel is used in the second network element, and the second submodel is used in the first network element. The first network element may be an access network device, and the second network element may be, for example, a terminal device. Alternatively, the first network element may be a terminal device, and the second network element may be an access network device. In addition, it may be understood that in a scenario in which a bilateral model needs to be deployed between terminal devices, both the first network element and the second network element in this disclosure may be the terminal devices. Alternatively, in a scenario in which a bilateral model needs to be deployed between access network devices, both the first network element and the second network element in this disclosure may be the access network devices. A type of the network element is not limited in this disclosure.

Further, the first submodel may be used to send information at a transmit end (or referred to as a network element at a transmit end), and the second submodel is used to receive the information at a receive end (or referred to as a network element at a receive end); or the second submodel is used to send information at a transmit end (or referred to as a network element at a transmit end), and the first submodel is used to receive the information at a receive end (or referred to as a network element at a receive end). The scenario includes but is not limited to the foregoing compression and restoration of the CSI, or the foregoing modulation and demodulation.

S502: The first network element determines the input data and the output data of the first submodel.

Specifically, the first network element may determine the input data of the first submodel based on the training data described in S501. For example, the training data described in S501 is used as the input data of the first submodel, or the input data of the first submodel is autonomously generated based on the training data described in S501. In addition, the first network element may alternatively determine the input data of the first submodel based on related data sent by the second network element. Alternatively, the first network element may alternatively obtain the input data of the first submodel through related measurement.

When the output of the second submodel is used to determine the input of the first submodel, the first network element may alternatively determine the input data of the first submodel based on the output data of the second submodel.

The first network element inputs the determined input data into the first submodel, and obtains the corresponding output data by using the first submodel.

In addition, it may be understood that the first submodel in S502 is a trained model, the input data of the first submodel may also be referred to as inference data of the first submodel, and the output data of the first submodel may also be referred to as an inference result of the first submodel.

S503: The first network element sends first information to the second network element.

In an optional implementation, the first information indicates the input data of the first submodel and/or the output data of the first submodel. For example, if the first network element determines the input data of the first submodel based on the related data obtained from the second network element, the first information that may be sent by the first network element to the second network element may indicate the output data of the first submodel but not indicate the input data of the first submodel. The related data may be used by the second network element to obtain the input data of the first submodel. For example, if the second network element side cannot autonomously determine the input data and the output data of the first submodel, the first information sent by the first network element to the second network element may indicate the input data of the first submodel and the output data of the first submodel. For example, if the second network element side cannot autonomously determine the output data of the first submodel but can determine the input data, the first information that may be sent by the first network element to the second network element may indicate the input data of the first submodel but not indicate the output data of the first submodel.

In another optional implementation, the first information may indicate the input data of the first submodel and label data of the first submodel. The label data of the first submodel is an expected value or a target value of the output data of the first submodel, and may be understood as data expected to be output by the first submodel. The label data of the first submodel may alternatively be described as a label sample of the first submodel or an output label of the first submodel. Certainly, it may be understood that when the second network element side may autonomously determine the input data and the label data of the first submodel, the first network element may not indicate the input data of the first submodel and the label data of the first submodel to the second network element by using the first information.

Optionally, the first network element may alternatively send, to the second network element, input data and/or output data corresponding to a plurality of groups of submodels, or the first network element may alternatively send, to the second network element, input data and label data corresponding to a plurality of groups of submodels.

S504: The second network element trains a third submodel based on the first information.

It may be understood that the first information is used for training the third submodel, or the first information is used for determining the third submodel.

In an implementation, the third submodel and the first submodel may meet at least one of the following features: a function of the third submodel is the same as a function of the first submodel; an input type of the third submodel is the same as the input type of the first submodel, and an output type of the third submodel is the same as the output type of the first submodel; a dimension of input data of the third submodel is the same as the dimension of the input data of the first submodel, and a dimension of output data of the third submodel is the same as the dimension of the output data of the first submodel; a format of the input data of the third submodel is the same as the format of the input data of the first submodel, and a format of the output data of the third submodel is the same as the format of the output data of the first submodel; when an input of the third submodel is the same as the input of the first submodel, a difference between an output of the third submodel and the output of the first submodel is less than a first threshold; and/or when the input of the third submodel is the same as the input of the first submodel, a difference between the output of the third submodel and the output label of the first submodel is less than a second threshold. The difference may be reflected by using parameters such as an NMSE, an MSE, or a cosine similarity.

The third submodel trained by the second network element may replace the first submodel previously trained by the first network element, that is, the third submodel may be used in a manner of matching the second submodel, to form a new bilateral model. It may be understood that network structures of the third submodel and the first submodel may be the same or different; and neural network types used by the third submodel and the first submodel may be the same or different. This is not limited in this disclosure.

Specifically, the second network element may determine training data of the third submodel and a label sample (referred to as a label for short below) of the third submodel based on the first information. The second network element may determine, based on the input data of the first submodel, training data of the third submodel, that is, the input data of the third submodel. The second network element may use the output data of the first submodel as the label, or the second network element may use the label data of the first submodel as the label of the third submodel. It may be understood that there is a mapping relationship between the input data of the first submodel and the output data of the first submodel. For example, there are one or more pieces of input data of the first submodel, where one piece of corresponding output data may be obtained when input data of each first submodel is input to the first submodel. There may be one or more pieces of training data that is of the third submodel and that is determined by the second network element based on the first information, and each piece of training data corresponds to one label. The following describes, by using an example in which there are the plurality of pieces of training data of the third submodel, a manner in which the second network element trains the third submodel.

In an optional implementation, the second network element inputs input data of each first submodel into a to-be-trained AI model, and may use output data or label data corresponding to the input data of the first submodel as a label, to obtain a third submodel through training. A loss function may represent a difference between an output of the third submodel and a label corresponding to the output. For example, the loss function may be specifically an NMSE or an MSE or a cosine similarity between the output of the third submodel and the label corresponding to the output. The to-be-trained AI model may be the foregoing DNN, for example, the FNN, the CNN, or the RNN, or may be another AI model. This is not limited in this disclosure. In another optional implementation, the second network element inputs input data of each first submodel into a basic model, may use output data or label data corresponding to the input data of the first submodel as a label, and may update the basic model based on this training data, to obtain a third submodel. The basic model may be a model obtained by the second network element through historical training, or the basic model may be preconfigured in the second network element. For example, for a scenario in which the bilateral model needs to be deployed, the basic model related to the scenario may be preconfigured on the second network element side.

In another implementation, the third submodel and the second submodel may meet at least one of the following features: a function of the third submodel is the same as a function of the second submodel; an input type of the third submodel is the same as the input type of the second submodel, and an output type of the third submodel is the same as an output type of the second submodel; a dimension of input data of the third submodel is the same as the dimension of the input data of the second submodel, and a dimension of output data of the third submodel is the same as the dimension of the output data of the second submodel; a format of the input data of the third submodel is the same as the format of the input data of the second submodel, and a format of the output data of the third submodel is the same as the format of the output data of the second submodel; and/or when an input of the third submodel is the same as the input of the second submodel, a difference between an output of the third submodel and the output of the second submodel is less than a first threshold. The difference may be reflected by using parameters such as an NMSE, an MSE, or a cosine similarity.

The third submodel trained by the second network element may replace the second submodel previously trained by the first network element, that is, the third submodel may be used in a manner of matching the first submodel, to form a new bilateral model. It may be understood that network structures of the third submodel and the second submodel may be the same or different; and neural network types used by the third submodel and the second submodel may be the same or different. This is not limited in this disclosure.

Specifically, the second network element may determine training data of the third submodel and a label sample (referred to as a label for short below) of the third submodel based on the first information. For example, in this case, the first information indicates the input data and the output data of the first submodel; or the first information indicates the input data or the output data of the first submodel, but the second network element may determine the output data or the input data that is of the first submodel and that is not indicated by the first information. The second network element may determine, based on the output data of the first submodel, training data of the third submodel, that is, the input data of the third submodel. The second network element may use the input data of the first submodel as the label of the third submodel. It may be understood that there is a mapping relationship between the input data of the first submodel and the output data of the first submodel. For example, there are one or more pieces of input data of the first submodel, where one piece of corresponding output data may be obtained when input data of each first submodel is input to the first submodel. There may be one or more pieces of training data that is of the third submodel and that is determined by the second network element based on the first information, and each piece of training data corresponds to one label. The following describes, by using an example in which there are the plurality of pieces of training data of the third submodel, a manner in which the second network element trains the third submodel.

In an optional implementation, the second network element inputs output data of each first submodel into a to-be-trained AI model, and may use input data corresponding to the output data of the first submodel as a label, to obtain a third submodel through training. A loss function may represent a difference between an output of the third submodel and a label corresponding to the output. For example, the loss function may be specifically an NMSE or an MSE or a cosine similarity between the output of the third submodel and the label corresponding to the output. The to-be-trained AI model may be the foregoing DNN, for example, the FNN, the CNN, or the RNN, or may be another AI model. This is not limited in this disclosure. In another optional implementation, the second network element inputs output data of each first submodel into a basic model, may use input data corresponding to the output data of the first submodel as a label, and may update the basic model based on this training data, to obtain a third submodel. The basic model may be a model obtained by the second network element through historical training, or the basic model may be preconfigured in the second network element. For example, for a scenario in which the bilateral model needs to be deployed, the basic model related to the scenario may be preconfigured on the second network element side.

Optionally, the second network element may determine a related parameter in a phase of training the third submodel. For example, the parameter may be defined on the second network element side in a predetermined manner, or the first network element indicates the related parameter to the second network element. The parameter includes a training end condition, and the second network element may train the third submodel based on the training end condition. The training end condition may include at least one of the following: training duration, a quantity of training iterations, or a performance threshold that the third submodel needs to meet. The performance threshold may be a convergence threshold of a loss function for training, testing, or verification, or the performance threshold may be another threshold, for example, a threshold set for a difference between the output data of the third submodel and the label. Specifically, the difference between the output data of the third submodel and the label may be represented by using a mean square error (mean square error, MSE), a normalized mean square error (normalization mean square error, NMSE), a cross-entropy, or the like. The parameter may further include a structure of the third submodel, a parameter of the third submodel, a loss function for training the third submodel, and the like.

Optionally, if the first network element sends input data and/or output data of a plurality of groups of submodels, the second network element may train corresponding submodels based on the input data and/or the output data of each group of submodels, to obtain a plurality of submodels. The second network element may train each group of submodels with reference to the foregoing manner of training the third submodel. Details are not described again in this disclosure. When constructing a new bilateral model and performing deduction (or referred to as inference) by using the new bilateral model, the first network element may further indicate, to the second network element, one or more submodels in the new bilateral model used by the second network element.

In this disclosure, the first network element trains a bilateral model, and indicates, to the second network element, an input/output related to a submodel in the bilateral model, so that a submodel with a same function independently trained by the second network element side can be used in a manner of matching another submodel on the first network element. This can meet an application requirement of the bilateral model, and the submodel does not need to be transmitted over an air interface, thereby reducing transmission overheads and improving communication security.

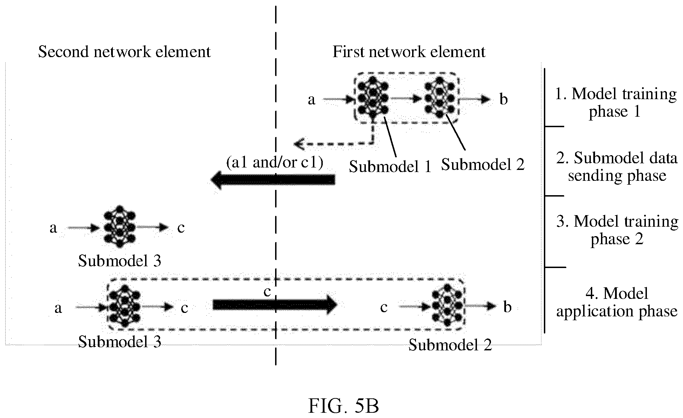

It should be noted that, although FIG. 5A is used as an example, and merely shows interaction between the two network elements, and it does not indicate that this disclosure is limited to the two network elements, and does not indicate that this disclosure is limited to that the bilateral model includes only the two submodels used in the matching manner. In this disclosure, with reference to the method described in FIG. 5A, submodels are distributed in more than two network elements and submodels distributed in the more than two network elements are used in the matching manner. With reference to the method in FIG. 5A, this disclosure further provides a schematic flowchart of deploying a bilateral model. FIG. 5B shows four phases. In a model training phase 1, the first network element trains a bilateral model, where the bilateral model includes a submodel 1 and a submodel 2, an input type of the submodel 1 is a, and an output type of the submodel 1 is c; and an input type of the submodel 2 is the same as the output type of the submodel 1, and an output type of the submodel 2 is b. In a submodel data sending phase, the first network element sends input data (denoted as a1) and/or output data (denoted as c1) of the submodel 1 to the terminal device. In a model training phase 2, the second network element may train a submodel 3 based on the received a1 and/or c1. For example, a1 is used as an input of the submodel 3, and c1 is used as an output of the submodel 3, so that a function of the submodel 3 obtained through training is the same as a function of the submodel 1. For another example, a1 is used as an output of the submodel 3, and c1 is used as an input of the submodel 3, so that a function of the submodel 3 obtained through training is the same as a function of the submodel 2.

For example, the function of the submodel 3 obtained through training is the same as the function of the submodel 1. In a model application phase (or referred to as a joint deduction phase), the second network element may obtain data of a type c based on the submodel 1 and the data of the type a. That is, an input type of the submodel 3 is a, and an output type of the submodel 3 is c; and the second network element sends the data of the type c to the first network element. The first network element may obtain data of a type b based on the submodel 2 and the data of the type c. That is, an input type of the submodel 2 is c, and an output type of the submodel 2 is b.

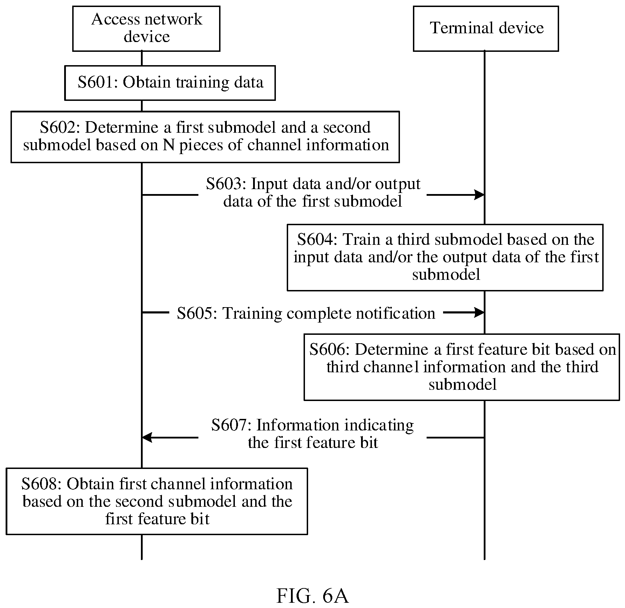

With reference to the method in FIG. 5A, an example in which an application scenario in which a bilateral model needs to be deployed is channel information feedback is used. This disclosure provides a communication method. Refer to FIG. 6A. The method includes the following procedure.

S601: An access network device obtains training data.

The training data includes N pieces of channel information. N is a positive integer, that is, N is an integer greater than or equal to 1. The training data is used to determine a bilateral model, and the bilateral model includes a first submodel and a second submodel.

For a definition of the channel information, refer to the following Manner B1 or Manner B2 for understanding.

In Manner B1, the channel information includes a downlink channel feature. In a TDD system, the access network device may obtain the downlink channel feature based on an uplink channel by using uplink and downlink reciprocity of the channel. Alternatively, in an FDD system, the access network device may obtain the downlink channel feature based on an uplink channel in a manner of processing some signals. Alternatively, a terminal device may report CSI to the access network device, where the CSI includes a precoding matrix index (precoding matrix index, PMI), and the PMI represents the downlink channel feature. In this case, the access network device may alternatively obtain the downlink channel feature by collecting the PMI reported by the terminal device. A manner in which the access network device obtains the downlink channel feature is not limited in this disclosure.

Optionally, the downlink channel feature may be a feature vector or a feature matrix of a downlink channel. The feature vector or the feature matrix may be obtained by the terminal device by performing singular value decomposition (singular value decomposition, SVD) on the downlink channel, or the feature vector or the feature matrix may be obtained by the terminal device by performing eigenvalue decomposition (eigenvalue decomposition, EVD) based on a covariance matrix of the downlink channel. In addition, the downlink channel feature may alternatively be a precoding matrix index (precoding matrix index, PMI). The PMI may be obtained by the terminal device by processing a downlink channel, a feature vector of the downlink channel, or a feature matrix of the downlink channel based on a predefined codebook.

In Manner B2, the channel information includes a downlink channel, that is, full channel information. In a TDD system, the access network device may obtain the downlink channel based on an uplink channel by using uplink and downlink reciprocity of the channel. Alternatively, in an FDD system, the access network device may obtain the downlink channel based on an uplink channel in a manner of processing some signals. Alternatively, a terminal device may report related information of the downlink channel to the access network device. In this case, the access network device may alternatively obtain the downlink channel based on the related information of the downlink channel. A manner in which the access network device obtains the downlink channel is not limited in this disclosure.

S602: The access network device determines a first submodel and a second submodel based on the N pieces of channel information.

The first submodel and the second submodel form a bilateral model used for channel information feedback, denoted as a first bilateral model. Specifically, the access network device may divide the obtained N pieces of channel information into one or more training sets. The access network device may train a same model by using some or all of the one or more training sets. For example, the access network device may train a same bilateral model by using one training set. Alternatively, for example, the access network device may train a same bilateral model by using the plurality of training sets.

An input of the first bilateral model includes channel information, and an output of the first bilateral model includes restored channel information. The channel information may be a downlink channel feature or a downlink channel. For a definition of the channel information, refer to S601 for understanding. Details are not described again. Training the first bilateral model may be understood as minimizing a difference between input channel information and output channel information as much as possible. A loss function corresponding to the first bilateral model may be represented as an MSE between the input channel information and the output channel information, a cross-entropy (cross-entropy) between the input channel information and the output channel information, a cosine similarity (cosine similarity) between the input channel information and the output channel information, or the like.

Optionally, in the first bilateral model, an input type of the first submodel may be consistent with an input type of the first bilateral model. That is, the input type of the first submodel is channel information, or the input of the first bilateral model is an input of the first submodel. An output type of the first submodel is a feature bit, and the feature bit includes one or more binary bits. It may be understood that the feature bit is a low-dimensional expression of the channel information, and the first submodel is used to compress and/or quantize the channel information to obtain the feature bit. An input of the second submodel is determined by an output of the first submodel. For example, an input type of the second submodel is consistent with the output type of the first submodel, and both are feature bits; or a dimension of input data of the second submodel is the same as a dimension of output data of the first submodel; or input data of the second submodel includes output data of the first submodel; or output data of the first submodel may be preprocessed and then input to the second submodel, that is, input data of the second submodel includes the preprocessed output data of the first submodel. An output of the second submodel is restored channel information. For example, the first bilateral model may be an auto-encoder, where the first submodel is an encoder, and the second submodel is a decoder.

The access network device may preset a dimension of the feature bit based on an actual requirement, and the dimension of the feature bit may also be referred to as a quantity of bits included in the feature bit. For example, in consideration of feedback overheads, the access network device may reduce the dimension of the feature bit, to reduce the feedback overheads. Specifically, the access network device may set the dimension of the feature bit to be less than a first dimension threshold. For example, in consideration of feedback precision, the access network device may increase the dimension of the feature bit, to improve the feedback precision. Specifically, the access network device may set the dimension of the feature bit to be greater than the first dimension threshold.

S603: The access network device sends input data and/or output data of the first submodel to the terminal device.

For a manner of determining the input data and the output data of the first submodel, refer to S502 for implementation. Details are not described in this disclosure. Specifically, the input data of the first submodel includes M pieces of channel information, and M is a positive integer. The output data of the first submodel includes feature bits corresponding to the M pieces of channel information, and M is a positive integer.

Optionally, when the terminal device may autonomously determine the input data of the first submodel, the access network device may send only the output data of the first submodel to the terminal device. For example, the input data of the first submodel is determined based on the channel information reported by the terminal device, and the access network device may send only the output data of the first submodel to the terminal device.

An example in which the terminal device reports a PMI to the access network device to implement channel information feedback is used below to describe, with reference to Implementation C1 or Implementation C2, a case in which the access network device may send only the output data of the first submodel.

In Implementation C1, the terminal device reports the PMI to the access network device, and the access network device obtains a corresponding downlink channel feature W based on the PMI reported by the terminal device. The access network device uses W as the input of the first submodel, and obtains a corresponding output, donated as a feature bit B. The access network device may send only the feature bit B to the terminal device. Specifically, each time the access network device receives a PMI reported by the terminal device, the access network device may generate a feature bit corresponding to the PMI, and send, to the terminal device, the feature bit corresponding to the PMI. Optionally, it may be set that a feature bit received by the terminal device within T1 time units after one PMI is reported is a feature bit corresponding to the PMI. The time unit may be a slot, a symbol, or the like. A value of T1 may be set based on an actual requirement, for example, one slot. This is not limited in this disclosure.

In Implementation C2, after receiving a plurality of PMIs reported by the terminal device, the access network device obtains downlink channel features $\hat{W}$ corresponding to the plurality of PMIs. The access network device sequentially inputs the plurality of W into the first submodel in a case of inputting one W each time, and obtains the plurality of corresponding feature bits based on an output. The access network device may send the plurality of feature bits to the terminal device.

There is a mapping relationship, for example, a one-to-one correspondence, between the plurality of PMIs and the plurality of feature bits. In an optional implementation, the mapping relationship between the plurality of feature bits and the plurality of PMIs may be predefined. For example, after receiving M PMIs each time, the access network device arranges corresponding N feature bits in one message in a specified sequence, and the terminal device may associate the N feature bits with the M PMIs in the specified sequence. The specified sequence may be a sequence in which the access network device receives the PMIs. Optionally, the message including the N feature bits may use a specified message format, and the specified message format may be set based on an actual requirement. This is not limited in this disclosure. In another optional implementation, the mapping relationship between the plurality of feature bits and the plurality of PMIs may be configured by the access network device for the terminal device.

The following describes a case in which the access network device sends the input data and the output data of the first submodel to the terminal device. The access network device may autonomously generate one or more pieces of channel information that meets a requirement, input the one or more pieces of channel information into the first submodel, and obtain one or more corresponding feature bits based on an output. The access network device sends the one or more pieces of channel information and the one or more feature bits to the terminal device. In this manner, the access network device may not obtain the PMI reported by the terminal device or does not need to wait for the PMI reported by the terminal device.

In addition, in addition to training the first bilateral model described in S602, the access network device may further train other bilateral models. Optionally, when training a plurality of bilateral models, the access network device may obtain, from the bilateral models, submodels that need to be used in the terminal device, and send input data and/or output data of the plurality of determined submodels to the terminal device.

S604: The terminal device trains a third submodel based on the input data and/or the output data of the first submodel.

This step may be implemented with reference to descriptions of S504. The terminal device may determine training data of the third submodel and a label sample (referred to as a label for short below) of the third submodel based on the obtained input data and/or output data of the first submodel. The following provides descriptions based on cases by using examples.

Case 1: Corresponding to Manner B1 described in S601, the channel information obtained by the access network device includes a downlink channel feature. The downlink channel feature may be specifically a PMI, a feature vector, a feature matrix, or the like.

For example, the terminal device reports a PMI, and the access network device may send, to the terminal device, output data of the first submodel, namely, a feature bit. The terminal device trains the third submodel based on the PMI reported by the terminal device and the feature bit sent by the access network device. For example, the terminal device may use the feature bit sent by the access network device as a label, and the training data used to train the third submodel may include the PMI. An input of the third submodel includes the PMI, and an output includes the feature bit.

For example, the terminal device reports a PMI, and the access network device may send, to the terminal device, output data of the first submodel, namely, a feature bit. The terminal device determines, based on the PMI reported by the terminal device, a feature vector or a feature matrix W used to generate the PMI. The terminal device trains the third submodel based on the feature vector or the feature matrix W and the feature bit sent by the access network device. For example, the terminal device may use the feature bit sent by the access network device as a label, and the training data used to train the third submodel may include the feature vector or the feature matrix W. An input of the third submodel includes the feature vector or the feature matrix W, and the output includes the feature bit.

For example, the terminal device reports a PMI, and the access network device may send, to the terminal device, output data of the first submodel, namely, a feature bit. The terminal device restores a downlink channel feature $\hat{W}$ by using a method the same as that of the access network device based on the PMI reported by the terminal device. The terminal device trains the third submodel based on the downlink channel feature $\hat{W}$ and the feature bit sent by the access network device. For example, the terminal device may use the feature bit sent by the access network device as a label, and the training data used to train the third submodel may include the downlink channel feature (for example, a feature vector or a feature matrix). An input of the third submodel includes the downlink channel feature $\hat{W}$, and an output includes the feature bit.

For example, the access network device sends, to the terminal device, input data and output data of the first submodel, namely, a downlink channel feature (for example, a PMI, a feature vector, or a feature matrix) and a feature bit. The terminal device trains the third submodel based on the downlink channel feature and the feature bit that are sent by the access network device. For example, the terminal device may use the feature bit sent by the access network device as a label, and the training data used to train the third submodel may include the downlink channel feature. An input of the third submodel includes the downlink channel feature, and an output includes the feature bit.

Case 2: Corresponding to the Manner B 1 described in S601, the training data of the third submodel may be a downlink channel.

For example, the terminal device reports related information of the downlink channel, and the access network device may send, to the terminal device, output data of the first submodel, namely, a feature bit. The terminal device determines, based on the related information of the downlink channel reported by the terminal device, the downlink channel used to generate the related information of the downlink channel. The terminal device trains the third submodel based on the downlink channel and the feature bit sent by the access network device. For example, the terminal device may use the feature bit sent by the access network device as a label, and the training data used to train the third submodel may include the downlink channel. An input of the third submodel includes the downlink channel, and an output includes the feature bit.

For example, the terminal device reports related information of the downlink channel, and the access network device may send, to the terminal device, output data of the first submodel, namely, a feature bit. The terminal device restores the downlink channel based on the related information of the downlink channel reported by the terminal device by using a method the same as that of the access network device. The terminal device trains the third submodel based on the restored downlink channel and the feature bit sent by the access network device. For example, the terminal device may use the feature bit sent by the access network device as a label, and the training data used to train the third submodel may include the restored downlink channel. An input of the third submodel includes the restored downlink channel, and an output includes the feature bit.

For example, the access network device sends, to the terminal device, input data and output data of the first submodel, namely, a downlink channel and a feature bit. The terminal device trains the third submodel based on the downlink channel and the feature bit that are sent by the access network device. For example, the terminal device may use the feature bit sent by the access network device as a label, and the training data used to train the third submodel may include the downlink channel. An input of the third submodel includes the downlink channel, and an output includes the feature bit.

S605: The terminal device sends a training complete notification to the access network device, where the training complete notification indicates that the training of the third submodel is completed.

Specifically, the terminal device may perform S605 after completing the training of the third submodel in S604. After obtaining the training complete notification, the access network device may know that a terminal device side may perform joint deduction by using the third submodel and the second submodel on an access network device side. Alternatively, it may be understood that the third submodel and the second submodel can form a new bilateral model used for channel information feedback, denoted as a second bilateral model.

In addition, the terminal device may further notify the access network device of performance of the trained third submodel. For example, the terminal device includes performance information in the training complete notification. For example, the performance information may include a performance parameter that the trained third submodel meets: a threshold of a loss function for training/testing/verification, or another performance such as an MSE, an NMSE, or a cross-entropy. For another example, the performance information only indicates whether the third submodel meets a performance requirement, and does not specifically indicate a performance parameter.

Further, optionally, the following shows, in S606 to S608, an example in which the third submodel and the second submodel are used in a matching manner. S606 to S608 may not be performed, or S606 to S608 may be replaced with another example in which the third submodel and the second submodel are used in a matching manner. This is not limited in this disclosure.

S606: The terminal device determines a first feature bit based on third channel information and the third submodel, where the input of the third submodel includes the third channel information, and the output of the third submodel includes the first feature bit.

S607: The terminal device sends, to the access network device, information indicating the first feature bit.

S608: The access network device obtains first channel information based on the second submodel and the first feature bit, where the input of the second submodel includes the first feature bit, and the output of the second submodel includes the first channel information.

Optionally, a smaller performance difference between the third submodel trained by the terminal device and the first submodel indicates a smaller difference between the first channel information and the third channel information, so that the first channel information can be maximally close to the third channel information in S606.

In this disclosure, the access network device trains the bilateral model used for the channel information feedback, and indicates, to the terminal device, the input/output related to the submodel in the bilateral model. The terminal device may independently train a submodel with a same function, and the submodel is used with another submodel on the access network device in the matching manner, so that an application requirement of the bilateral model can be met, and the model does not need to be transmitted over an air interface, thereby reducing transmission overheads and improving communication security.

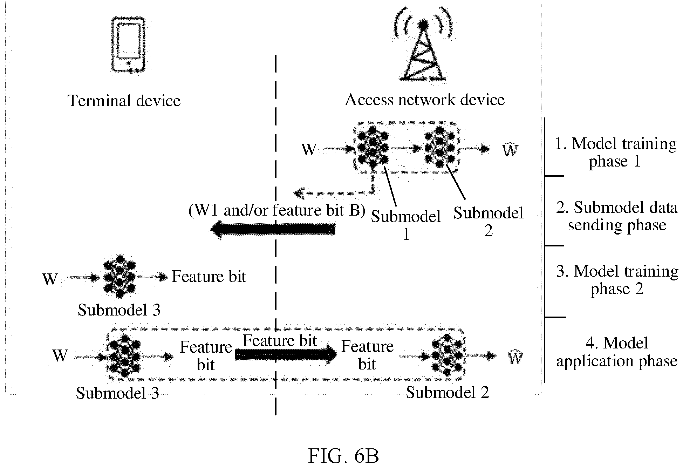

With reference to the method in FIG. 6A, this disclosure further provides a schematic flowchart of deploying a bilateral model. FIG. 6B shows four phases. In a model training phase 1, an access network device trains a bilateral model, where the bilateral model includes a submodel 1 and a submodel 2, an input type of the submodel 1 is a downlink channel feature such as a feature vector or a feature matrix W, and an output type of the submodel 1 is a feature bit; and an input type of the submodel 2 is the same as the output type of the submodel 1, and an output type of the submodel 2 is a restored downlink channel feature W. In a submodel data sending phase, the access network device sends input data (denoted as W1) and/or output data (denoted as a feature bit B) of the submodel 1 to a terminal device. In a model training phase 2, the terminal device may train a submodel 3 based on the received W1 and/or feature bit B. A function of the submodel 3 is the same as a function of the submodel 1. In a model application phase (or referred to as a joint deduction phase), the terminal device may obtain, based on the submodel 1 and the data of the type W, data whose type is a feature bit. That is, an input type of the submodel 3 is W, and an output type of the submodel 3 is a feature bit. The terminal device sends, to the access network device, the data whose type is the feature bit. The access network device may obtain, based on the submodel 2 and the data whose type is the feature bit, data whose type is $\hat{W}$. That is, the input type of the submodel 2 is the feature bit, and the output type of the submodel 2 is $\hat{W}$.

It may be understood that the submodel 1 in FIG. 6B may be the first submodel in FIG. 6A, the submodel 2 in FIG. 6B may be the second submodel in FIG. 6A, and the submodel 3 in FIG. 6B may be the third submodel in FIG. 6A.

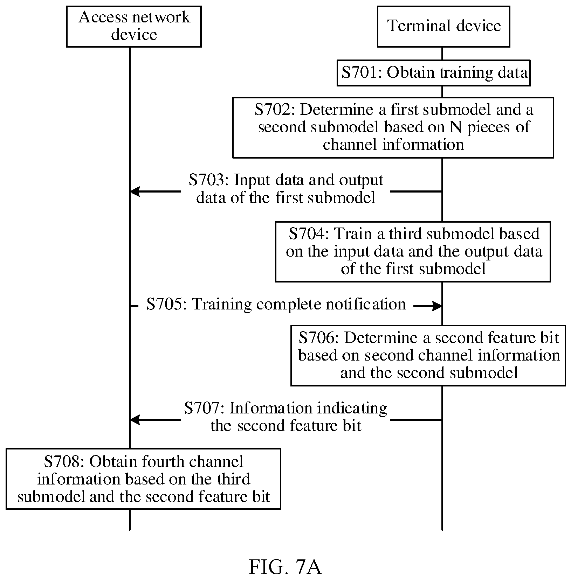

With reference to the method in FIG. 5A, an example in which an application scenario in which a bilateral model needs to be deployed is channel information feedback is used. This disclosure provides another communication method. Refer to FIG. 7A. The method includes the following procedure.

S701: A terminal device obtains training data.

The training data includes N pieces of channel information. N is a positive integer, that is, N is an integer greater than or equal to 1. The training data is used to determine a bilateral model, and the bilateral model includes a first submodel and a second submodel.

Corresponding to related descriptions in S601, the channel information may specifically include a downlink channel and a downlink channel feature. For the terminal device, the terminal device may determine the channel information through measurement of a downlink reference signal.

S702: The terminal device determines the first submodel and the second submodel based on the N pieces of channel information.

The first submodel and the second submodel form a bilateral model used for channel information feedback, denoted as a third bilateral model. Specifically, the terminal device may divide the obtained N pieces of channel information into one or more training sets. The terminal device may train a same model by using some or all of the one or more training sets. For example, the terminal device may train a same bilateral model by using one training set. Alternatively, for example, the terminal device may train a same bilateral model by using the plurality of training sets.

For example, the channel information is a downlink channel feature. If the downlink channel feature obtained by the terminal device is a downlink channel feature matrix or a vector W, the terminal device may train a bilateral model based on the obtained downlink channel feature; or the terminal device may first convert the downlink channel feature matrix or the vector W into a PMI, restore a downlink channel feature matrix or a vector W based on the PMI, and then train a bilateral model by using the restored downlink channel feature matrix or vector $\hat{W}$.

An input of the third bilateral model includes channel information, and an output of the third bilateral model includes restored channel information. The channel information may be a downlink channel feature or a downlink channel. For a definition of the channel information, refer to S601 for understanding. Details are not described again. Training the third bilateral model may be understood as minimizing a difference between input channel information and output channel information as much as possible. A loss function corresponding to the third bilateral model may be represented as an MSE between the input channel information and the output channel information, a cross-entropy (cross-entropy) between the input channel information and the output channel information, a cosine similarity (cosine similarity) between the input channel information and the output channel information, or the like. Training the third bilateral model may alternatively be minimizing a difference between output channel information and label channel information as much as possible. A loss function corresponding to the third bilateral model may be represented as an MSE between the output channel information and the label channel information, a cross-entropy (cross-entropy) between the output channel information and the label channel information, a cosine similarity (cosine similarity) between the output channel information and the label channel information, or the like.

Optionally, in the third bilateral model, an input type of the second submodel may be consistent with an input type of the third bilateral model. That is, the input type of the second submodel is channel information, or the input of the third bilateral model is an input of the second submodel. An output type of the second submodel is a feature bit, and the feature bit includes one or more binary bits. It may be understood that the feature bit is a low-dimensional expression of the channel information, and the second submodel is used to compress and/or quantize the channel information to obtain the feature bit. An input of the first submodel is determined by an output of the second submodel. For example, an input type of the first submodel is consistent with the output type of the second submodel, and both are feature bits; or a dimension of input data of the first submodel is the same as a dimension of output data of the second submodel; or input data of the first submodel includes output data of the second submodel; or output data of the second submodel may be preprocessed and then input to the first submodel, that is, input data of the first submodel includes the preprocessed output data of the second submodel. An output of the first submodel is restored channel information. For example, the third bilateral model may be an auto-encoder, where the second submodel is an encoder, and the first submodel is a decoder.

The terminal device may preset a dimension of the feature bit based on an actual requirement, and the dimension of the feature bit may also be referred to as a quantity of bits included in the feature bit. For example, in consideration of feedback overheads, the terminal device may reduce the dimension of the feature bit, to reduce the feedback overheads. Specifically, the terminal device may set the dimension of the feature bit to be less than a first dimension threshold. For example, in consideration of feedback precision, the terminal device may increase the dimension of the feature bit, to improve the feedback precision. Specifically, the terminal device may set the dimension of the feature bit to be greater than a first dimension threshold.

S703: The terminal device sends the input data and output data of the first submodel to the access network device.

Specifically, the terminal device may generate the input data and the output data of the first submodel by using the first submodel; or the terminal device may generate the input data of the first submodel by using the second submodel, and generate the output data of the first submodel by using the first submodel. For example, the input data of the first submodel includes M feature bits, the output data of the first submodel includes channel information corresponding to the M feature bits, and M is a positive integer.

For example, the channel information is a downlink channel feature. The terminal device may send M downlink channel features and M feature bits to the access network device. Alternatively, the terminal device may convert the M downlink channel features into M PMIs, and then send the M feature bits and the M PMIs to the access network device.

In addition, optionally, S703 may alternatively be replaced as follows: The terminal device sends the input data and label data of the first submodel to the access network device. The terminal device may generate the input data of the first submodel by using the second submodel, and the terminal device may send the input data of the first submodel and the corresponding label data to the access network device. It may be understood that, in the solution described in FIG. 7A, the label data of the first submodel is label data of the third bilateral model. Specifically, the label data corresponding to the input data of the first submodel is the label data corresponding to input data of the third bilateral model corresponding to the input data of the first submodel.

S704: The access network device trains the third submodel based on the input data and/or the output data of the first submodel.

The access network device may directly train the third submodel by using the M feature bits and the channel information corresponding to the M feature bits that are sent by the terminal device. Alternatively, if the channel information sent by the terminal device is specifically PMIs, the access network device may first restore the M PMIs to M downlink channel feature vectors or matrices, and then train the third submodel by using the M feature bits and the M downlink channel feature vectors or matrices.

This step may be implemented with reference to descriptions of S504. Details are not described in this disclosure.

In addition, optionally, corresponding to S703, it may also be understood that this step may be replaced as follows: The access network device trains the third submodel based on the input data and the label data of the first submodel.

S705: The access network device sends a training complete notification to the terminal device, where the training complete notification indicates that the training of the third submodel is completed.

Specifically, the access network device may perform S705 after completing the training of the third submodel in S704. After obtaining the training complete notification, the access network device may know that a terminal device side may perform joint deduction by using the third submodel and the second submodel on an access network device side. Alternatively, it may be understood that the third submodel and the second submodel can form a new bilateral model used for channel information feedback, denoted as a fourth bilateral model.

In addition, the terminal device may further notify the access network device of performance of the trained third submodel. For example, the terminal device includes performance information in the training complete notification. For example, the performance information may include a performance parameter that the trained third submodel meets: a threshold of a loss function for training/testing/verification, or another performance such as an MSE, an NMSE, or a cross-entropy. For another example, the performance information only indicates whether the third submodel meets a performance requirement, and does not specifically indicate a performance parameter.

Further, optionally, the following shows, in S706 to S708, an example in which the third submodel and the second submodel are used in a matching manner. S706 to S708 may not be performed, or S706 to S708 may be replaced with another example in which the third submodel and the second submodel are used in a matching manner. This is not limited in this disclosure.

S706: The terminal device determines a second feature bit based on second channel information and the second submodel, where the input of the second submodel includes the second channel information, and the output of the second submodel includes the second feature bit.

S707: The terminal device sends, to the access network device, information indicating the second feature bit.

S708: The access network device obtains fourth channel information based on the third submodel and the second feature bit, where the input of the third submodel includes the second feature bit, and the output of the third submodel includes the fourth channel information.

Optionally, a smaller performance difference between the third submodel trained by the access network device and the first submodel indicates a smaller difference between the fourth channel information and the second channel information, so that the fourth channel information can be maximally close to the second channel information in S706.

In this disclosure, the terminal device trains the bilateral model used for the channel information feedback, and indicates, to the access network device, the input and the output related to the submodel in the bilateral model. The access network device may independently train a submodel with a same function, and the submodel is used with another submodel on the terminal device in the matching manner, so that an application requirement of the bilateral model can be met, and the model does not need to be transmitted over an air interface, thereby reducing transmission overheads and improving communication security.

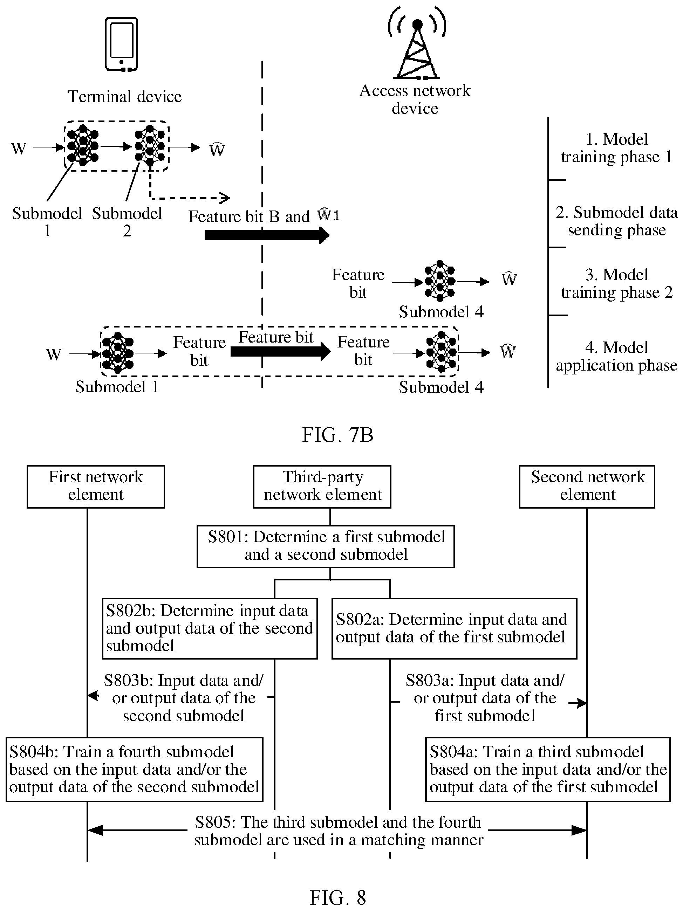

With reference to the method in FIG. 7A, this disclosure further provides a schematic flowchart of deploying a bilateral model. FIG. 7B shows four phases. In a model training phase 1, a terminal device trains a bilateral model, where the bilateral model includes a submodel 1 and a submodel 2, an input type of the submodel 1 is a downlink channel feature such as a feature vector or a feature matrix W, and an output type of the submodel 1 is a feature bit; and an input type of the submodel 2 is the same as the output type of the submodel 1, and an output type of the submodel 2 is a restored downlink channel feature W. In a submodel data sending phase, the terminal device sends input data (denoted as a feature bit B) and output data (denoted as W1) of the submodel 2 to the access network device. In a model training phase 2, the access network device may train a submodel 4 based on the received feature bits B and W1. A function of the submodel 4 is the same as a function of the submodel 2. In a model application phase (or referred to as a joint deduction phase), the terminal device may obtain, based on the submodel 1 and the data of the type W, data whose type is a feature bit. That is, the input type of the submodel 1 is W, and the output type of the submodel 1 is a feature bit. The terminal device sends, to the access network device, the data whose type is the feature bit; and the access network device may obtain, based on the submodel 4 and the data whose type is the feature bit, data whose type is W. That is, the input type of the submodel 4 is the feature bit, and the output type of the submodel 4 is W.

It may be understood that the submodel 1 in FIG. 7B may be the second submodel in FIG. 7A, the submodel 2 in FIG. 7B may be the first submodel in FIG. 7A, and the submodel 4 in FIG. 7B may be the third submodel in FIG. 7A.

Solution 2

FIG. 8 shows a communication method. The method includes the following procedure.

S801: A third-party network element determines a first submodel and a second submodel.

For details, refer to S501 for implementation. Details are not described in this disclosure again.

This solution is described below by using an example in which the first submodel is used in a second network element and the second submodel is used in a first network element. The first network element may be an access network device, and the second network element may be, for example, a terminal device. Alternatively, the first network element may be a terminal device, and the second network element may be an access network device. In addition, optionally, the third-party network element may be an independent AI network element.

S802a: The third-party network element determines input data and output data of the first submodel, and then performs S803a.

Alternatively, optionally, step S802a may alternatively be replaced as follows: The third-party network element determines input data and label data of the first submodel.

For details, refer to S502 for implementation. Details are not described in this disclosure again.

S802b: The third-party network element determines input data and output data of the second submodel, and then performs S803b.

Alternatively, optionally, step S802b may alternatively be replaced as follows: The third-party network element determines input data and label data of the second submodel.

For details, refer to S502 for implementation. Details are not described in this disclosure again.

S803a: The third-party network element sends the input data and/or the output data of the first submodel to the second network element, and then performs S804a.

Alternatively, optionally, corresponding to S802a, step S803a may alternatively be replaced as follows: The third-party network element sends input data and label data of the first submodel to the second network element.

For details, refer to S503 for implementation. For example, the third-party network element sends first information to the second network element. When the third-party network element determines the input data and/or the output data of the first submodel, the first information includes the input data and/or the output data of the first submodel. When the third-party network element determines the input data and the label data of the first submodel, the first information includes the input data and/or the label data of the first submodel.

S803b: The third-party network element sends the input data and/or the output data of the second submodel to the first network element, and then performs S804b.

Alternatively, optionally, corresponding to S802b, step S803b may alternatively be replaced as follows: The third-party network element sends the input data and/or the label data of the second submodel to the first network element, or the third-party network element sends the input data and/or the label data of the second submodel to the first network element.

For details, refer to S503 for implementation. For example, the third-party network element sends second information to the first network element. When the third-party network element determines the input data and/or the output data of the second submodel, the second information includes the input data and/or the output data of the second submodel. When the third-party network element determines the input data and the label data of the second submodel, the second information includes the input data and/or the label data of the second submodel.

S804a: The second network element trains a third submodel based on the input data and/or the output data of the first submodel, and S805 is then performed.

Alternatively, optionally, corresponding to S803a, step S804a may alternatively be replaced as follows: The second network element trains a third submodel based on the input data and/or the label data of the first submodel.

For details, refer to S504 for implementation. Details are not described in this disclosure again.

S804b: The first network element trains a fourth submodel based on the input data and/or the output data of the second submodel, and S805 is then performed.

Alternatively, optionally, corresponding to S803b, step S804b may alternatively be replaced as follows: The first network element trains a fourth submodel based on the input data and/or the label data of the second submodel.

For details, refer to S504 for implementation. Details are not described in this disclosure again. For example, a relationship between the second submodel and the fourth submodel may be understood based on a relationship between the first submodel and the third submodel.

S805: The third submodel on the second network element and the fourth submodel on the first network element are used in a matching manner. That is, the third submodel and the fourth submodel form a new bilateral model.

In this disclosure, the third-party network element trains a bilateral model, and indicates, to a plurality of network elements, inputs/outputs related to a plurality of submodels in the bilateral model, so that a submodel with a same function independently trained on each network element side can be used in a manner of matching a submodel on another network element. This can meet an application requirement of the bilateral model, and the model does not need to be transmitted over an air interface, thereby reducing transmission overheads and improving communication security.

From perspectives of the first network element, the second network element, the third-party network element, and interaction between the first network element, the second network element, and the third-party network element, the foregoing separately describes the method provided in this disclosure. To implement functions in the foregoing method, the first network element, the second network element, and the third-party network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on a particular application and a design constraint condition of the technical solution.

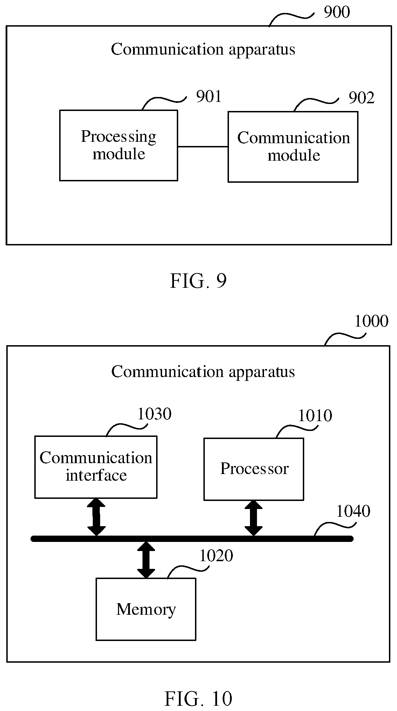

Based on a same concept, as shown in FIG. 9, this disclosure provides a communication apparatus 900. The communication apparatus 900 includes a processing module 901 and a communication module 902. The communication apparatus 900 may be a first network element, or may be a communication apparatus that is used in a first network element or is used with a first network element in a matching manner and that can implement a communication method performed on a first network element side. Alternatively, the communication apparatus 900 may be a second network element, or may be a communication apparatus that is used in a second network element or is used with the second network element in a matching manner and that can implement a communication method performed on a second network element side. Alternatively, the communication apparatus 900 may be a third-party network element, or may be a communication apparatus that is used in a third-party network element or is used with a third-party network element in a matching manner and that can implement a communication method performed on a third-party network element side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a device that is in the communication module and that is configured to implement a receiving function may be considered as a receiving unit. It should be understood that the communication module is configured to perform a sending operation and a receiving operation on an access network device side or a terminal device side in the foregoing method embodiments, and a device that is in the communication module and that is configured to implement a sending function is considered as a sending unit. That is, the communication module includes a receiving unit and a sending unit.

When the communication apparatus 900 is used in the first network element, the receiving unit included in the communication module 902 of the communication apparatus 900 is configured to: perform a receiving operation on the first network element side, for example, receive a signal from the second network element; and the sending unit included in the communication module 902 of the communication apparatus 900 is configured to: perform a sending operation on the first network element side, for example, send a signal to the second network element. When the communication apparatus 900 is used in the second network element, the receiving unit included in the communication module 902 of the communication apparatus 900 is configured to: perform a receiving operation on the second network element side, for example, receive a signal from the first network element; and the sending unit included in the communication module 902 of the communication apparatus 900 is configured to: perform a sending operation on the second network element side, for example, send a signal to the first network element. When the communication apparatus 900 is used in the third-party network element, the receiving unit included in the communication module 902 of the communication apparatus 900 is configured to: perform a receiving operation on the third-party network element side, for example, receive a signal from the first network element or the second network element; and the sending unit included in the communication module 902 of the communication apparatus 900 is configured to: perform a sending operation on the third-party network element side, for example, send a signal to the first network element or the second network element.

In addition, it should be noted that if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

The following describes in detail an implementation in which the communication apparatus 900 is used in a first network element. Corresponding to the method described in FIG. 5A, the first network element may be an access network device or a terminal device.

The processing module 901 is configured to determine a first submodel and a second submodel, where the first submodel and the second submodel can be used in a matching manner.

The communication module 902 is configured to send first information, where the first information indicates input data of the first submodel and/or output data of the first submodel, or the first information indicates input data of the first submodel and label data of the first submodel.

In this disclosure, input data and/or output data of one submodel that is of a plurality of submodels and that can be used in the matching manner are/is provided, so that a submodel with a same function as the submodel can be independently trained, and the submodel does not need to be transmitted over an air interface, thereby reducing transmission overheads and improving communication security.

In a possible design, an output of the first submodel is used to determine an input of the second submodel; or an output of the second submodel is used to determine an input of the first submodel.

In a possible design, the first submodel is used to send information at a transmit end, and the second submodel is used to receive the information at a receive end; or the second submodel is used to send information at a transmit end, and the first submodel is used to receive the information at a receive end.

In a possible design, the first submodel and the second submodel belong to a bilateral model.

In a possible design, the first information is used to train a third submodel.

In an optional implementation, a function of the third submodel is the same as a function of the first submodel; and/or an input type of the third submodel is the same as an input type of the first submodel, and an output type of the third submodel is the same as an output type of the first submodel; and/or a dimension of input data of the third submodel is the same as a dimension of the input data of the first submodel, and a dimension of output data of the third submodel is the same as a dimension of the output data of the first submodel; and/or when an input of the third submodel is the same as the input of the first submodel, a difference between an output of the third submodel and the output of the first submodel is less than a first threshold; and/or when the input of the third submodel is the same as the input of the first submodel, a difference between the output of the third submodel and an output label of the first submodel is less than a second threshold. The third submodel and the second submodel form a new bilateral model.

In another optional implementation, when the first information indicates the input data of the first submodel and/or the output data of the first submodel, a function of the third submodel is the same as a function of the second submodel; and/or an input type of the third submodel is the same as an input type of the second submodel, and an output type of the third submodel is the same as an output type of the second submodel; and/or a dimension of input data of the third submodel is the same as a dimension of input data of the second submodel, and a dimension of output data of the third submodel is the same as a dimension of output data of the second submodel; and/or when an input of the third submodel is the same as the input of the second submodel, a difference between an output of the third submodel and the output of the second submodel is less than a first threshold; and/or when the input of the third submodel is the same as the input of the second submodel, a difference between the output of the third submodel and an output label of the second submodel is less than a second threshold. In such a design, the third submodel that replaces the second submodel is independently trained, so that the third submodel can be used in the manner of matching the first submodel, thereby reducing transmission overheads for sending the second submodel. In addition, the third submodel and the first submodel can also form a new bilateral model.

In a possible design, the processing module 901 is specifically configured to determine a first submodel and a second submodel based on training data, where the training data includes N pieces of channel information, N is a positive integer, and the channel information includes a downlink channel feature or a downlink channel.

In a possible design, the input data of the first submodel includes M pieces of channel information, and M is a positive integer.

In a possible design, the output data of the first submodel includes feature bits corresponding to the M pieces of channel information, and M is a positive integer.

In a possible design, the communication module 902 is further configured to obtain information indicating a first feature bit, where the output of the third submodel includes the first feature bit. The processing module 901 is further configured to obtain first channel information based on the second submodel and the first feature bit, where the input of the second submodel includes the first feature bit, and the output of the second submodel includes the first channel information.

In a possible design, the input data of the first submodel includes M feature bits, and M is a positive integer.

In a possible design, the output data of the first submodel includes channel information corresponding to the M feature bits, and M is a positive integer.

In a possible design, the input data of the first submodel includes M feature bits, the label data of the first submodel includes channel information corresponding to the M feature bits, and M is a positive integer.

In a possible design, the processing module 901 is further configured to determine a second feature bit based on second channel information and the second submodel, where the input of the second submodel includes the second channel information, and the output of the second submodel includes the second feature bit. The communication module 902 is further configured to send information indicating the second feature bit.

In a possible design, the processing module 901 is further configured to determine a second feature bit based on second channel information and the second submodel, where the input of the second submodel includes the second channel information, and the output of the second submodel includes the second feature bit. The communication module 902 is further configured to: send information indicating the second feature bit and the second channel information, or send information indicating the second feature bit and label channel information corresponding to the second feature bit. The label channel information corresponding to the second feature bit may be understood as an output label of the third submodel, for example, may be second channel information. The following describes in detail an implementation in which the communication apparatus 900 is used in a second network element. Corresponding to the method described in FIG. 5A, the second network element may be a terminal device or an access network device.

The communication module 902 is configured to obtain first information, where the first information indicates input data of a first submodel and/or output data of the first submodel, or the first information indicates input data of the first submodel and label data of the first submodel.

The processing module 901 is configured to train a third submodel based on the first information.

In the foregoing design, based on obtained input data and/or output data of a submodel, a submodel with a same function as the submodel may be independently trained. This can be used in a scenario in which a bilateral model is deployed, and the submodel does not need to be transmitted over an air interface, so that transmission overheads can be reduced, and communication security can be improved.

In a possible design, a function of the third submodel is the same as a function of the first submodel; and/or an input type of the third submodel is the same as an input type of the first submodel, and an output type of the third submodel is the same as an output type of the first submodel; and/or a dimension of input data of the third submodel is the same as a dimension of the input data of the first submodel, and a dimension of output data of the third submodel is the same as a dimension of the output data of the first submodel; and/or when an input of the third submodel is the same as an input of the first submodel, a difference between an output of the third submodel and an output of the first submodel is less than a first threshold.

In a possible design, the first submodel and a second submodel can be used in a matching manner.

In a possible design, the output of the first submodel is used to determine an input of the second submodel; or an output of the second submodel is used to determine the input of the first submodel.

In a possible design, the first submodel is used to send information at a transmit end, and the second submodel is used to receive the information at a receive end; or the second submodel is used to send information at a transmit end, and the first submodel is used to receive the information at a receive end.

In a possible design, the first submodel and the second submodel belong to a bilateral model; and the third submodel and the second submodel form a new bilateral model.

In a possible design, the input data of the first submodel includes M pieces of channel information, and M is a positive integer.

In a possible design, the output data of the first submodel includes feature bits corresponding to the M pieces of channel information, and M is a positive integer.

In a possible design, the processing module 901 is further configured to determine a first feature bit based on third channel information and the third submodel, where the input of the third submodel includes the third channel information, and the output of the third submodel includes the first feature bit. The communication module 902 is further configured to send information indicating the first feature bit.

In a possible design, an input parameter of the first submodel includes M feature bits, and M is a positive integer.

In a possible design, an output parameter of the first submodel includes channel information corresponding to the M feature bits, and M is a positive integer.

In a possible design, the communication module 902 is further configured to obtain information indicating a second feature bit. The processing module 901 is further configured to obtain fourth channel information based on the third submodel and the second feature bit, where the input of the third submodel includes the second feature bit, and the output of the third submodel includes the fourth channel information.

The following describes in detail an implementation in which the communication apparatus 900 is used in a third-party network element. Corresponding to the method described in FIG. 8, the third-party network element may be an AI network element.

The processing module 901 is configured to determine a first submodel and a second submodel.

The communication module 902 is configured to: send first information to a second network element, where the first information includes input data and/or output data of the first submodel, or the first information includes input data and label data of the first submodel, and the first information is used to train a third submodel; and send second information to a first network element, where the second information includes input data and/or output data of the second submodel, or the second information includes input data and label data of the second submodel, and the second information is used to train a fourth submodel.

For a relationship between the first submodel, the second submodel, the third submodel, and the fourth submodel, refer to descriptions in the foregoing method embodiment for understanding. Details are not described again in this disclosure.

Division into the modules in this disclosure is an example, is merely division into logical functions, and may be other division during actual implementation. In addition, functional modules in embodiments of this disclosure may be integrated into one processor, or each of the modules may exist alone physically, or two or more modules may be integrated into one module. The integrated module may be implemented in a form of hardware, or may be implemented in a form of a software functional module.

Based on a same technical concept, this disclosure further provides a communication apparatus 1000. The communication apparatus 1000 may be a chip or a chip system. Optionally, in this disclosure, the chip system may include a chip, or may include a chip and another discrete device.

The communication apparatus 1000 may be configured to implement a function of a terminal device or an access network device in the communication system shown in FIG. 1A, or may be configured to implement a function of a terminal device, an access network device, or an AI network element in the communication system shown in FIG. 1B. The communication apparatus 1000 may include at least one processor 1010. The processor 1010 is coupled to a memory. Optionally, the memory may be located inside the apparatus, the memory may be integrated with the processor, or the memory may be located outside the apparatus. For example, the communication apparatus 1000 may further include at least one memory 1020. The memory 1020 stores a computer program, configuration information, a computer program or instructions, and/or data that are necessary for implementing any one of the foregoing embodiments. The processor 1010 may execute the computer program stored in the memory 1020, to complete the method in any one of the foregoing embodiments.

The communication apparatus 1000 may further include a communication interface 1030. The communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (or referred to as receiving information) and output information (or referred to as sending information). The processor is an integrated processor, a microprocessor, an integrated circuit, or a logic circuit. The processor may determine output information based on the input information.

The coupling in this disclosure is an indirect coupling or a communication connection between apparatuses, units, or modules, may be in an electrical form, a mechanical form, or another form, and is used for information exchange between the apparatuses, the units, or the modules. The processor 1010 may perform a collaborative operation with the memory 1020 and the communication interface 1030. A specific connection medium between the processor 1010, the memory 1020, and the communication interface 1030 is not limited in this disclosure.

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is used to represent the bus in FIG. 10, but this does not mean that there is only one bus or only one type of bus.

In this disclosure, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this disclosure. The general-purpose processor may be a microprocessor, any conventional processor, or the like. The steps in the methods disclosed with reference to this disclosure may be directly implemented by a hardware processor, or may be implemented by a combination of hardware and a software module in a processor.

In this disclosure, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1000 may be used in a terminal device. Specifically, the communication apparatus 1000 may be a terminal device, or may be an apparatus that can support a terminal device in implementing a function of the terminal device in any one of the foregoing embodiments. The memory 1020 stores a computer program, a computer program or instructions, and/or data that are necessary for implementing the function of the terminal device in any one of the foregoing embodiments. The processor 1010 may execute the computer program stored in the memory 1020, to complete the method performed by the terminal device in any one of the foregoing embodiments. The communication apparatus is used in the terminal device. The communication interface in the communication apparatus 1000 may be configured to: interact with an access network device, and send data to the access network device or receive data from the access network device.

In another possible implementation, the communication apparatus 1000 may be used in an access network device. Specifically, the communication apparatus 1000 may be an access network device, or may be an apparatus that can support the access network device in implementing a function of the access network device in any one of the foregoing embodiments. The memory 1020 stores a computer program, a computer program or instructions, and/or data that are necessary for implementing the function of the access network device in any one of the foregoing embodiments. The processor 1010 may execute the computer program stored in the memory 1020, to complete the method performed by the access network device in any one of the foregoing embodiments. The communication apparatus is used in the access network device. The communication interface in the communication apparatus 1000 may be configured to: interact with a terminal device, and send data to the terminal device or receive data from the terminal device.

In another possible implementation, the communication apparatus 1000 may be used in an AI network element. Specifically, the communication apparatus 1000 may be an AI network element, or may be an apparatus that can support the AI network element in implementing a function of the AI network element in any one of the foregoing embodiments. The memory 1020 stores a computer program, a computer program or instructions, and/or data that are necessary for implementing the function of the AI network element in any one of the foregoing embodiments. The processor 1010 may execute the computer program stored in the memory 1020, to complete the method performed by the AI network element in any one of the foregoing embodiments. The communication apparatus is used in the AI network element. The communication interface in the communication apparatus 1000 may be configured to: interact with an access network device, and send data to the access network device or receive data from the access network device.

The communication apparatus 1000 provided in this embodiment may be used in the terminal device to complete the method performed by the terminal device, or may be used in the access network device to complete the method performed by the access network device, or may be used in the AI network element to complete the method performed by the AI network element. Therefore, for technical effects that can be achieved by this embodiment, refer to the foregoing method embodiments. Details are not described herein again.

Based on the foregoing embodiments, this disclosure further provides a computer program. When the computer program is run on a computer, the computer is enabled to perform, from a perspective of a terminal device side or an access network device side, the communication methods provided in the embodiments shown in FIG. 5A to FIG. 8.

Based on the foregoing embodiments, this disclosure further provides a computer-readable storage medium. The computer-readable storage medium stores a computer program. When the computer program is executed by a computer, the computer is enabled to perform, from a perspective of a terminal device side or an access network device side, the communication methods provided in the embodiments shown in FIG. 5A to FIG. 8. The storage medium may be any usable medium that can be accessed by the computer. By way of example, and not limitation, the computer readable medium may include a RAM, a read-only memory (read-only memory, ROM), an electrically erasable programmable read-only memory (electrically erasable programmable read-only memory, EEPROM), a CD-ROM or another optical disc storage, a magnetic disk storage medium or another magnetic storage device, or any other medium that can be used to carry or store expected program code in a form of an instruction or a data structure and can be accessed by a computer.

Based on the foregoing embodiments, this disclosure provides a communication system, including a terminal device and an access network device. The terminal device and the access network device may implement the communication methods provided in the embodiments shown in FIG. 5A to FIG. 8.

Based on the foregoing embodiments, this disclosure further provides a chip. The chip is configured to: read a computer program stored in a memory, and implement, from a perspective of a terminal device side or an access network device side, the communication methods provided in the embodiments shown in FIG. 5A to FIG. 8.

Based on the foregoing embodiments, this disclosure provides a chip system. The chip system includes: a processor, configured to support a computer apparatus in implementing a function of the terminal device or the access network device in the embodiments shown in FIG. 5A to FIG. 8. In a possible design, the chip system further includes a memory, and the memory is configured to store a program and data that are necessary for the computer apparatus. The chip system may include a chip, or may include a chip and another discrete device.

All or some of the technical solutions provided in this disclosure may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedure or functions in this disclosure are generated. The computer may be a general-purpose computer, a dedicated computer, a computer network, an access network device, a terminal device, an AI node, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this disclosure, on the premise that there is no logic contradiction, the embodiments may be mutually referenced. For example, methods and/or terms in the method embodiments may be mutually referenced, functions and/or terms in the apparatus embodiments may be mutually referenced, and functions and/or terms in the apparatus embodiments and the method embodiments may be mutually referenced.

It is clear that, persons skilled in the art can make various modifications and variations to this disclosure without departing from the scope of this disclosure. In this way, this disclosure is intended to cover these modifications and variations of this disclosure provided that they fall within the scope of the claims of this disclosure and equivalent technologies thereof.

**Claims**

1. A communication method, comprising:

   determining a first submodel and a second submodel, wherein the first submodel and the second submodel are used in a matching manner; and
   sending first information, wherein the first information indicates input data of the first submodel and/or output data of the first submodel.

2. The method according to claim 1, wherein

   an output of the first submodel is used to determine an input of the second submodel; or
   an output of the second submodel is used to determine an input of the first submodel.

3. The method according to claim 1 or 2, wherein

   the first submodel is used to send information at a transmit end, and the second submodel is used to receive the information at a receive end; or
   the second submodel is used to send information at a transmit end, and the first submodel is used to receive the information at a receive end.

4. The method according to any one of claims 1 to 3, wherein the first submodel and the second submodel belong to a bilateral model.

5. The method according to any one of claims 1 to 4, wherein the first information is used to train a third submodel, wherein

   a function of the third submodel is the same as a function of the first submodel; and/or
   an input type of the third submodel is the same as an input type of the first submodel, and an output type of the third submodel is the same as an output type of the first submodel; and/or
   a dimension of input data of the third submodel is the same as a dimension of the input data of the first submodel, and a dimension of output data of the third submodel is the same as a dimension of the output data of the first submodel; and/or
   when an input of the third submodel is the same as the input of the first submodel, a difference between an output of the third submodel and the output of the first submodel is less than a first threshold.

6. The method according to any one of claims 1 to 5, wherein the determining a first submodel and a second submodel comprises:
   determining the first submodel and the second submodel based on training data, wherein the training data comprises N pieces of channel information, N is a positive integer, and the channel information comprises a downlink channel feature or a downlink channel.

7. The method according to any one of claims 1 to 6, wherein the input data of the first submodel comprises M pieces of channel information, and M is a positive integer.

8. The method according to any one of claims 1 to 7, wherein the output data of the first submodel comprises feature bits corresponding to the M pieces of channel information, and M is a positive integer.

9. The method according to any one of claims 5 to 8, wherein the method further comprises:

obtaining information indicating a first feature bit, wherein the output of the third submodel comprises the first feature bit; and
obtaining first channel information based on the second submodel and the first feature bit, wherein the input of the second submodel comprises the first feature bit, and the output of the second submodel comprises the first channel information.

10. The method according to any one of claims 1 to 6, wherein the input data of the first submodel comprises M feature bits, and M is a positive integer.

11. The method according to any one of claims 1 to 6 and 10, wherein the output data of the first submodel comprises channel information corresponding to the M feature bits, and M is a positive integer.

12. The method according to claim 10 or 11, wherein the method further comprises:

determining a second feature bit based on second channel information and the second submodel, wherein the input of the second submodel comprises the second channel information, and the output of the second submodel comprises the second feature bit; and
sending information indicating the second feature bit.

13. A communication method, comprising:

obtaining first information, wherein the first information indicates input data of a first submodel and/or output data of the first submodel; and
training a third submodel based on the first information.

14. The method according to claim 13, wherein a function of the third submodel is the same as a function of the first submodel; and/or

an input type of the third submodel is the same as an input type of the first submodel, and an output type of the third submodel is the same as an output type of the first submodel; and/or
a dimension of input data of the third submodel is the same as a dimension of the input data of the first submodel, and a dimension of output data of the third submodel is the same as a dimension of the output data of the first submodel; and/or
when an input of the third submodel is the same as an input of the first submodel, a difference between an output of the third submodel and an output of the first submodel is less than a first threshold.

15. The method according to claim 13 or 14, wherein the first submodel and a second submodel can be used in a matching manner.

16. The method according to claim 15, wherein the output of the first submodel is used to determine an input of the second submodel; or an output of the second submodel is used to determine the input of the first submodel.

17. The method according to claim 15 or 16, wherein the first submodel is used to send information at a transmit end, and the second submodel is used to receive the information at a receive end; or the second submodel is used to send information at a transmit end, and the first submodel is used to receive the information at a receive end.

18. The method according to any one of claims 13 to 17, wherein the first submodel and the second submodel belong to a bilateral model.

19. The method according to any one of claims 13 to 18, wherein the input data of the first submodel comprises M pieces of channel information, and M is a positive integer.

20. The method according to any one of claims 13 to 19, wherein the output data of the first submodel comprises feature bits corresponding to the M pieces of channel information, and M is a positive integer.

21. The method according to any one of claims 13 to 20, wherein the method further comprises:

determining a first feature bit based on third channel information and the third submodel, wherein the input of the third submodel comprises the third channel information, and the output of the third submodel comprises the first feature bit; and

sending information indicating the first feature bit.

22. The method according to any one of claims 13 to 18, wherein an input parameter of the first submodel comprises M feature bits, and M is a positive integer.

23. The method according to any one of claims 13 to 18 and 22, wherein an output parameter of the first submodel comprises channel information corresponding to the M feature bits, and M is a positive integer.

24. The method according to claim 22 or 23, wherein the method further comprises:

obtaining information indicating a second feature bit; and

obtaining fourth channel information based on the third submodel and the second feature bit, wherein the input of the third submodel comprises the second feature bit, and the output of the third submodel comprises the fourth channel information.

25. A communication apparatus, configured to implement the method according to any one of claims 1 to 12.

26. A communication apparatus, configured to implement the method according to any one of claims 13 to 24.

27. A communication apparatus, comprising:
a processor, wherein the processor is coupled to a memory, and the processor is configured to perform the method according to any one of claims 1 to 12.

28. A communication apparatus, comprising:
a processor, wherein the processor is coupled to a memory, and the processor is configured to perform the method according to any one of claims 13 to 24.

29. A communication system, comprising the communication apparatus according to claim 25 or 27 and the communication apparatus according to claim 26 or 28.

30. A computer-readable storage medium, wherein the computer-readable storage medium stores instructions, and when the instructions are run on a computer, the computer is enabled to perform the method according to any one of claims 1 to 12 or the method according to any one of claims 13 to 24.

31. A computer program product, comprising instructions, wherein when the instructions are run on a computer, the computer is enabled to perform the method according to any one of claims 1 to 12 or the method according to any one of claims 13 to 24.

Terminal
device 120

Terminal
device 130

Access network
device 110

FIG. 1A

AI network
element 140

Access network
device 110

Terminal
device 120

Terminal
device 130

FIG. 1B

$w_0 x_0$

$w_1 x_1$

Neuron

$$y = f\left(\sum_{i=0}^{n} w_i x_i + b\right)$$

$y$

$w_n x_n$

FIG. 2A

FIG. 2B

FIG. 3

FIG. 4A

FIG. 4B

FIG. 4C

FIG. 4D

Core network
device

AI entity

NG                    NG

CU                              CU

AI entity          Xn          AI entity

OAM

F1                              F1

DU                              DU

AI entity                      AI entity              AI entity

FIG. 4E

First network
element

Second network
element

S501: Determine a first submodel
and a second submodel

S502: Determine input data and output data of
the first submodel

S503: First information

S504: Train a third submodel based on
the first information

FIG. 5A

Second network element          First network element

a →◉→◉→ b          1. Model training
                                   phase 1

(a1 and/or c1)    Submodel 1  Submodel 2    2. Submodel data
←━━━━━                                          sending phase

a →◉→ c                         3. Model training
Submodel 3                          phase 2

a →◉→ c ━━━━→ c →◉→ b          4. Model
Submodel 3                Submodel 2      application phase

FIG. 5B

Access network
device

Terminal device

S601: Obtain training data

S602: Determine a first submodel and a second
submodel based on N pieces of channel information

S603: Input data and/or output
data of the first submodel

S604: Train a third submodel based on the
input data and/or the output data of the first
submodel

S605: Training complete notification

S606: Determine a first feature bit based on
third channel information and the third
submodel

S607: Information indicating
the first feature bit

S608: Obtain first channel information
based on the second submodel and the
first feature bit

FIG. 6A

FIG. 6B

Access network
device

Terminal device

S701: Obtain training data

S702: Determine a first submodel and a
second submodel based on N pieces of
channel information

S703: Input data and output
data of the first submodel

S704: Train a third submodel based
on the input data and the output data
of the first submodel

S705: Training complete notification

S706: Determine a second feature bit
based on second channel information
and the second submodel

S707: Information indicating
the second feature bit

S708: Obtain fourth channel
information based on the third
submodel and the second feature bit

FIG. 7A

FIG. 7B

FIG. 8

900

Communication apparatus

901

Processing
module

902

Communication
module

FIG. 9

1000

Communication apparatus

1030

Communication
interface

1010

Processor

1040

1020

Memory

FIG. 10

## INTERNATIONAL SEARCH REPORT

| | International application No. |
|---|---|
| | **PCT/CN2022/118269** |

| | | |
|---|---|---|
| **A.** | **CLASSIFICATION OF SUBJECT MATTER** | |
| | H04L 41/16(2022.01)i;  G06N 3/04(2006.01)i | |
| | According to International Patent Classification (IPC) or to both national classification and IPC | |

| **B.** | **FIELDS SEARCHED** |
|---|---|
| Minimum documentation searched (classification system followed by classification symbols) |
| H04L G06N |

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 人工智能, 模型, 子模型, 训练, 推理, 功能, 实体, 输入, 输出, 匹配, 双边, 双端, 协作, 网元, 信道, 降低, 减少, 开销, AI, Artificial Intelligence, model?, sub-model?, training, inference , function, entity, network, device?, element?, channel

| **C.** | **DOCUMENTS CONSIDERED TO BE RELEVANT** | |
|---|---|---|
| Category* | Citation of document, with indication, where appropriate, of the relevant passages | Relevant to claim No. |
| X | CN 109685202 A (TENCENT TECHNOLOGY SHENZHEN CO., LTD.) 26 April 2019 (2019-04-26) <br> description, paragraphs [0023]-[0185] | 1-3, 10, 25, 27, 30, 31 |
| X | CN 112783807 A (SHENZHEN DAPU MICROELECTRONICS CO., LTD.) 11 May 2021 (2021-05-11) <br> description, paragraphs [0051]-[0105] | 13, 22, 26, 28, 30, 31 |
| A | CN 113365287 A (HUAWEI TECHNOLOGIES CO., LTD.) 07 September 2021 (2021-09-07) <br> entire document | 1-31 |
| A | US 10944436 B1 (HARRIS GLOBAL COMMUNICATIONS, INC.) 09 March 2021 (2021-03-09) <br> entire document | 1-31 |
| A | QUALCOMM INC. ""Model Training Procedure"" <br> *3GPP TSG-RAN WG3 Meeting #112-e R3-211755*, 07 May 2021 (2021-05-07), <br> section 2 | 1-31 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2022** | **22 November 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/118269** |

**C.  DOCUMENTS CONSIDERED TO BE RELEVANT**

| Category* | Citation of document, with indication, where appropriate, of the relevant passages | Relevant to claim No. |
| --- | --- | --- |
| A | CHINA TELECOM. ""Solution to AI based ES in RAN Split Architecture"" *3GPP TSG-RAN WG3 #113-e R3-213956*, 06 August 2021 (2021-08-06), section 2 | 1-31 |

Form PCT/ISA/210 (second sheet) (January 2015)

**INTERNATIONAL SEARCH REPORT**
Information on patent family members

International application No.

**PCT/CN2022/118269**

| Patent document cited in search report | | | Publication date (day/month/year) | Patent family member(s) | | | Publication date (day/month/year) |
|---|---|---|---|---|---|---|---|
| CN | 109685202 | A | 26 April 2019 | US | 2021042889 | A1 | 11 February 2021 |
| | | | | EP | 3901829 | A1 | 27 October 2021 |
| | | | | WO | 2020125236 | A1 | 25 June 2020 |
| | | | | EP | 3901829 | A4 | 23 March 2022 |
| CN | 112783807 | A | 11 May 2021 | WO | 2022142478 | A1 | 07 July 2022 |
| CN | 113365287 | A | 07 September 2021 | WO | 2021175103 | A1 | 10 September 2021 |
| US | 10944436 | B1 | 09 March 2021 | EP | 3826190 | A1 | 26 May 2021 |

Form PCT/ISA/210 (patent family annex) (January 2015)

**REFERENCES CITED IN THE DESCRIPTION**

**Patent documents cited in the description**

- CN 202111064144X